(19)

Europäisches
Patentamt
European
Patent Office
Office européen
des brevets

(11)  **EP 2 369 807 A1**

(12)  **EUROPEAN PATENT APPLICATION**

(43) Date of publication:
**28.09.2011  Bulletin 2011/39**

(51) Int Cl.:
**H04L 29/06** (2006.01)

(21) Application number: **10157379.8**

(22) Date of filing: **23.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(71) Applicant: **Voipfuture GmbH
20537 Hamburg (DE)**

(72) Inventors:
 • **Krüger, Michael
  25337, Kölln-Reisiek (DE)**
 • **Bastian, Jan
  13437, Berlin (DE)**

(74) Representative: **Appelt, Christian W.
Forrester & Boehmert
Pettenkoferstrasse 20-22
80336 München (DE)**

(54)  **Impairment detection and recording of isochronous media streams**

(57)  This invention relates to a capturing scheme for the storing packets of isochronous, real-time packets streams in response to a trigger condition. The invention is suggesting a non-intrusive, passive monitoring solution for monitoring isochronous real-time traffic, which is allowing for an economic capturing of packets and can be implemented on standard server hardware. The invention is using a real-time impairment analysis run on impairment intervals, and a per-session or per-packet stream impairment interval-based packet capturing in response to a capturing trigger firing. One or more triggers can be defined based on various metrics either obtained from the packets of the packet streams or defined by the operator.

Fig. 4

EP 2 369 807 A1

**Description**

**FIELD OF THE INVENTION**

This invention relates to a capturing scheme for the storing packets of isochronous real-time packet streams in response to a trigger condition. This trigger condition may be one or more criteria (rules or events) that, when encountered or fulfilled, cause a monitoring probe to start/stop capturing packets of an impaired isochronous, real-time packet stream or multiple isochronous real-time packet streams belonging to a single media session. Furthermore, the invention also provides a monitoring probe for use in a communications network that is implementing the capturing scheme according to one of the various embodiments of this invention described herein. Moreover, a computer readable medium is provided that is storing instructions to implement a capturing scheme according to one of the various embodiments of this invention described herein.

**TECHNICAL BACKGROUND**

**Measuring Voice Quality**

Today two main categories exist for measuring voice quality. The first method is called the subjective method, which involves real human test persons who express their opinion about their perceived voice quality. The average quality rating from all test persons is expressed as the Mean Opinion Score (MOS). The MOS score is expressed as an Absolute Category Rating (ACR) which defines a 5 point scale from 5 (excellent), 4 (good), 3 (fair), 2 (poor) to 1 (bad). An attempt for repeatable measurement results has been made, by defining the ITU-T P.800 (see http://www.itu.int/rec/T-REC-P.800-199608-I) industry recommendation, which provides normative speech samples to be used for the subjective test method. The results of the subjective test method are further separated in listening and conversational quality. This is expressed by further specifying the type of the MOS score:

- $MOS_{LQS}$ (Listening Quality - Subjective)
- $M\,O\,S_{CQS}$ (Conversational Quality - Subjective)

Since the subjective method does involve human beings, the method is not suited to be automated by test equipment.
The second method for measuring voice quality is called objective method. This method has been designed for automated voice measurement by test and monitoring equipment. The goal of this method is to provide reliable, objective and repeatable measurement results for a voice quality rating that is similar to the subjective method performed by real human beings. Similar to the subjective method, MOS scores for listening and conversational quality have been defined:

- $MOS_{LQO}$ (Listening Quality - Objective)

- $MOS_{CQO}$ (Conversational Quality - Objective)

**Intrusive and Non-Intrusive Monitoring of Voice Quality**

The objective MOS scores can be measured following two very different approaches. The first approach is an intrusive or active method, where the speech samples defined in ITU-T P.800 will be encoded by a VoIP sender, transferred over the packet based IP network and then decoded by the VoIP receiver. The MOS score is then calculated by comparing the known speech input signal from the VoIP sender with the received speech signal from the receiver. The method is called intrusive or active because the test signal is transferred in addition to eventually other VoIP traffic available on the network. Active VoIP monitoring can be used for VoIP readiness tests, prior deployment of a VoIP infrastructure because no other VoIP traffic is required, since the test equipment does generate the test data used for measurement itself. Active testing has been defined by the industry recommendation ITU-T P.862 PESQ (see http://www.itu.int/rec/T-REC-P.862-200102-I) and ITU-T P.862.1 (see http://www.itu.int/rec/T-REC-P.862.1-200311-I). A benefit of this method is that all factors that can have an impact on VoIP quality are being considered, like the VoIP endpoint, codec, noise, delay, echo and the effects of the IP network. The drawback of active testing is that real voice testing of real calls performed by real users is not measured. Because of the transient nature of VoIP impairments in IP networks, it is quite possible that the results of active testing do not reflect the quality experienced by real users.
The second approach is the passive measurement method. With passive monitoring real VoIP calls are measured so that no artificial traffic needs to be generated. The industry standards ITU-T G.107 E-Model (see http:

//www.itu.int/rec/T-REC-G.107-200904-P) and ITU-T P.564 (see http://www.itu.int/rec/T-REC-P.564-200711-I) define recommendations for passive monitoring of VoIP traffic in IP networks.

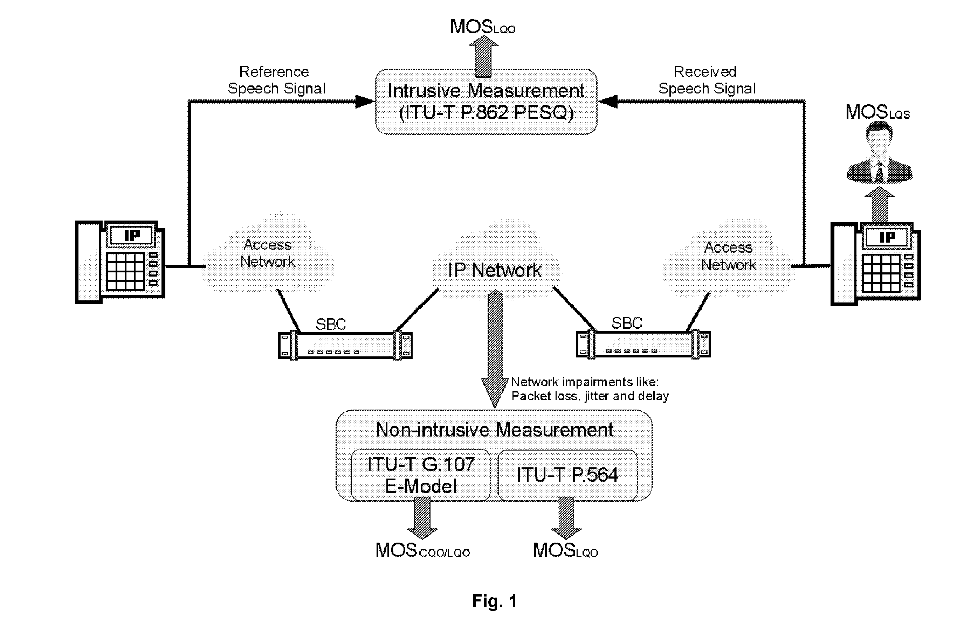

Fig. 1 provides an overview on the different measurement concepts, and where they are being applied. Passive monitoring is measuring real VoIP calls without using a reference speech signal. This also means that deployment of passive monitoring solutions is often easier, since only one location has to be visited. Since the speech payload of live calls is unknown, only those statistics/metrics can be considered that are independent from the speech payload. Mainly these metrics are loss, jitter and delay.

A single-server non-intrusive, passive monitoring system that is capable of implementing the ITU-T G.107 standard, considers effects visible to the monitoring system via deep packet inspection and packet flow analysis.

A minimal non-intrusive, passive monitoring system is made from a monitoring probe and a test access port (TAP) to connect to the network to be tested, and optionally a post-processing platform to visualize the measurement results of the monitoring probe. A TAP is a passive network device, which can mirror network traffic without interference of the original network traffic, by creation of a copy of every IP packet. It provides a copy of every packet send or received on the network, by separating the full-duplex network link, into two half-duplex network links, which are then connected to a specialized packet capture card (network interface card - NIC) installed in the probe. These specialized packet capture card are capable of receiving and processing packets on the physical interface and to provide them to the application layer, nearly without requiring CPU processing time and operation system functionality.

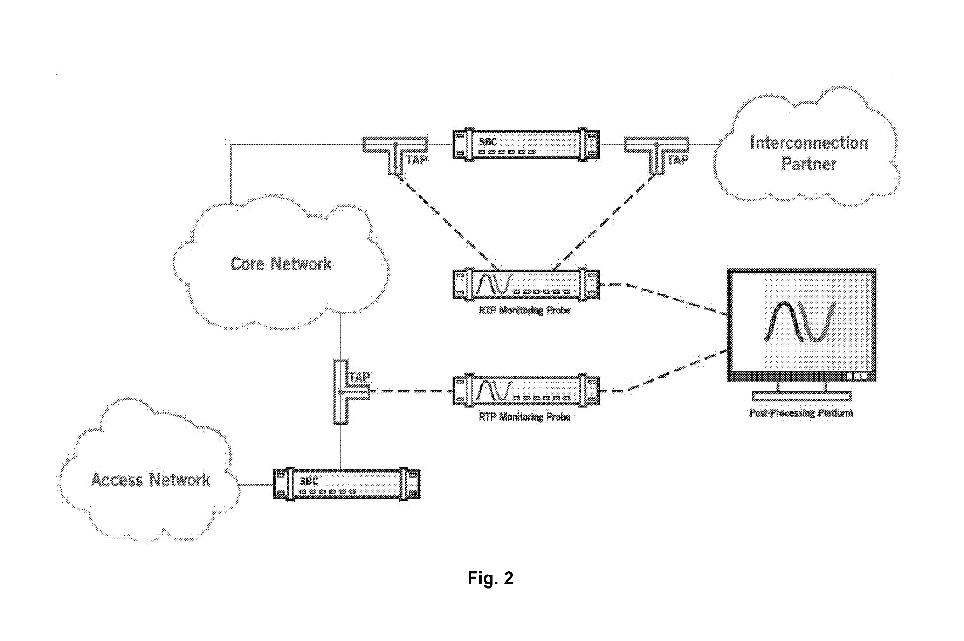

Fig. 2 shows an exemplary monitoring system of a passive non-intrusive monitoring solution deployed in a VoIP network. Fig. 2 indicates possible mid-point monitoring locations (TAP positions) within a carrier network. Optionally multiple monitoring probes can be deployed in the network so that RTP streams can be evaluated end-to-end. Furthermore the impact of installed network hardware like an SBC or media-gateway on the RTP stream quality can be analyzed.

As mentioned above, passive non-intrusive monitoring solutions for VoIP traffic are based on packet flow analysis of RTP streams, which are used to transfer speech over IP networks. This analysis can be performed either as an integral part of a VoIP device like an IP-phone, media-gateway, or in mid-point somewhere in the network between the calling parties. Both approaches have advantages and disadvantages. If the analysis is integrated into a VoIP device, additional important information becomes available to the packet flow analyzer like the size of the de-jitter buffer, and if received packets are considered for further processing or discarded due to late arrival (large jitter). The availability of this information can be a major advantage in accurately estimating the VoIP quality for the end user of the device. Disadvantages are that devices may only have a limited view on the full VoIP service (e.g. an IP-phone) because only the incoming or outgoing calls will be subject to monitoring. All other VoIP traffic directed to other end points would be unavailable, unless the flow analysis is integrated into every IP-phone used, which is practically hard to achieve. Another disadvantage is that VoIP devices are service specific hardware with limited performance and resources available for additional data processing for which they have not been designed. Packet flow analysis can be a very CPU intensive task and the results have to be stored somewhere. CPU resources and disk space is something that is not sufficiently available on IP-phones or media-gateways.

Because of these limitations, a monitoring solution based on passive mid-point monitoring as shown in Fig. 1 and Fig. 2 may be advantageous as monitoring is performed on copies of the network traffic, which is produced by a network TAP to which the monitoring probes are connected. This way the quality measurement doesn't have any impact on the real network traffic, is hardware and manufacturer independent, while being able to produce a full view of all live calls being transferred at the network location under test.

There are however some cases where passive monitoring does not allow detecting every problem. In those cases a full packet capture is often the only reasonable approach to solve the issue. The amount of data that would need to be processed when full packet capture to disk is used is enormous even on a 1 GB/s Ethernet connection and it is not possible from an economic point of view to process this amount of data in real-time, so that results could be used to dynamically adapt to impairments. Practical experience has also shown that only a few VoIP calls are experiencing quality degradations at the same time, so that it would be a huge waste of resources to perform analysis on a full packet capture, just to find out that the majority of the VoIP sessions have no quality issues at all.

For example, consider a 1 GBit/s Ethernet link fully utilized by VoIP sessions using a G.711 codec for speech encoding with a packet interval of 20 ms (160 Bytes of payload in every packet). In this case approximately 1.000.000 RTP packets per second generated from 10.500 concurrent VoIP sessions have to be dealt with.

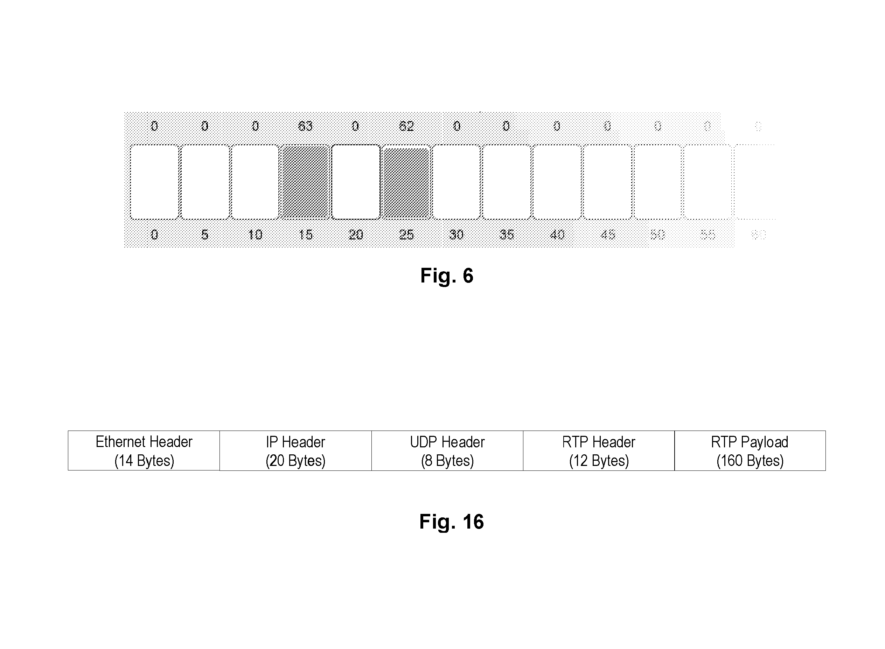

The structure of a single RTP packet in this setup is exemplified Fig. 16. The VoIP packet as received at the network interface by the monitoring probe will consist of the MAC header (Ethernet header), the IP header, the UDP header and a RTP header followed by the actually payload, the speech data. Overall the size of a single RTP packet on the data link layer using this codec and packet interval is 214 Bytes, which means that at least 214 MBytes of data have to be stored per second to capture all packets on a 1 GBit/s Ethernet link fully utilized by VoIP sessions using a G.711 codec for speech encoding with a packet interval of 20 ms. In addition to the packet data itself, a packet capture header may need to be added depending on the capture format being used, which would be further increasing the amount data to capture per second. The amount of hardware and processing power required to process this number of bytes is just too high to make economic sense for a larger deployment of passive, mid-point monitoring solutions in VoIP networks.

**SUMMARY OF THE INVENTION**

One object of the invention is to suggest a non-intrusive, passive monitoring solution for monitoring isochronous real-time traffic, which is allowing for an economic capturing of packets. Furthermore it is another object of the invention to suggest a non-intrusive, passive monitoring solution for monitoring isochronous real-time packet streams allowing for packet capture using standard server hardware.

At least one of the objects is solved by the subject matter of the independent claims. Advantageous embodiments of the invention are subject to the dependent claims.

A first aspect of this invention is a capturing scheme for storing packets of isochronous real-time packet streams in response to a trigger condition. This trigger condition may be one or more criteria (rules or events) that, when encountered or fulfilled, cause a monitoring probe to start (or stop) capturing packets of an impaired isochronous, real-time packet stream (or multiple isochronous real-time packet streams belonging to a single media session).

The trigger deciding on whether to start packet recording may be checked in real-time, i.e. on an impairment analysis interval basis, for each of the isochronous real-time packet streams received at the probe. This way the monitoring probe can decide for each impairment analysis interval and for each received isochronous stream, whether to capture the packets of the respective isochronous real-time packet stream or not.

The storage of the packets of the respective isochronous real-time packet stream received in a given impairment analysis interval (or impairment analysis window) may be either immediate (i.e. in direct response to the one or more trigger criteria obtained from the real-time impairment analysis of the respective isochronous real-time packet stream causing a trigger to fire), or delayed in case the trigger condition is depending for example on a given number of occurrences of an event in a given time period. If the packets of an isochronous real-time packet stream are not to be recorded for a given impairment analysis interval, they are dropped at the end of the impairment analysis interval (or as soon as their impairment analysis interval falls out of an impairment analysis window of multiple impairment intervals). This way the number of packets to be buffered and analyzed in the probe can be kept at an economically reasonable level, which allows for the implementation of the capturing scheme on standard server hardware.

One further, second aspect of the invention is the real-time impairment analysis performed on the packets of the isochronous real-time packet streams arriving at the probe on an impairment analysis interval basis. The impairment analysis analyses packets of the respective isochronous real-time packet streams received at the probe within the current impairment analysis interval, and produces for each isochronous real-time packet stream an impairment record (also referred to as a quality data record (QDR) or quality record herein) of the packets of the respective isochronous real-time packet streams. The impairment record for the respective streams is generated at the end of each respective impairment interval.

An impairment record for an isochronous real-time packet stream indicates whether the impairment analysis revealed impairment in the data stream or not. An impairment record may for example comprise different statistics/metrics of the packet stream within the current impairment analysis interval and optionally further statistics/metrics determined across the current impairment interval's boundary (e.g. on the basis of multiple impairment analysis intervals), e.g. by considering previous impairment records of the respective isochronous real-time packet streams. Based on the results of the impairment analysis of (or the impairment records obtained for) the isochronous real-time packet streams, the monitoring probe may decide whether a trigger has been met (i.e. the packets of a given stream are to be stored), or whether the packets of a given stream can be dropped (discarded).

In line with these aspects of the invention, one exemplary embodiment of the invention provides a method for storing packets of isochronous real-time packet streams in a packet-switched communications network. According to this method, a monitoring probe is receiving packets of plural packet streams including the isochronous real-time packet streams and is performing an impairment analysis on the received isochronous real-time packet streams. The impairment analysis can be used for detecting impairments of a respective isochronous real-time packet stream received within the current impairment analysis interval for example based on deviations from its presumed isochronous characteristics.

The impairment analysis is for example performed on an impairment interval basis. In this impairment analysis the probe analyses packets of the respective isochronous real-time packet streams received at the probe within the current impairment analysis interval, and generates for each isochronous real-time packet stream an impairment record of the packets of the respective isochronous real-time packet stream. The impairment records are provided at the end of the current impairment interval.

Furthermore, the monitoring probe decides for each isochronous real-time packet stream and in real-time (i.e. on an impairment analysis interval-basis), whether to store or drop the packets of the respective isochronous real-time packet stream received within the current impairment analysis interval. This decision for a respective isochronous, real-time packet stream is based on the impairment record obtained for the respective, isochronous real-time packet stream within the current impairment analysis interval. According to this decision, the monitoring probe either stores or drops the respective isochronous real-time packet stream received within the current impairment analysis interval.

Furthermore, the monitoring probe may be further storing the impairment records generated for the isochronous real-time packet streams for the current impairment analysis interval.

In a further embodiment of the invention, the monitoring probe further identifies the isochronous real-time packet streams of which packets are received at the probe within the current impairment analysis interval. This identification may be for example performed by the network interface card of the probe or by a software application also performing the impairment analysis. The latter option may be advantageous as the entire packet streams arriving at the probe would be visible to the impairment analysis and could be thus considered in the impairment analysis. Moreover, the monitoring probe is temporarily buffering the packets of the identified isochronous real-time packet streams received within the current impairment analysis interval.

In one exemplary embodiment of the invention, in the impairment analysis performed by the probe comprises, the probe determines for each isochronous real-time packet stream, at least the inter-arrival time of packets received in sequentially correct order within the current impairment analysis interval.

Furthermore the probe may perform for each isochronous real-time packet stream, a pattern matching to thereby determine whether one of plural patterns (e.g. a histogram pattern) indicative of different types of impairments is present in the (e.g. histogram of the) inter-arrival time of the respective isochronous real-time packet stream's packets. This pattern matching may only consider the packets of the respective packet stream that are received in sequentially correct order within the current impairment analysis interval. In more detail, the (histogram) patterns may for example indicate deviations from presumed isochronous characteristics of an isochronous real-time packet stream, wherein the deviations are characteristic for the respective types of impairments.

Moreover, the monitoring probe may also determine for each isochronous real-time packet stream, an impairment record of the current impairment analysis interval indicative of the type of impairment, if present, based on the result of the pattern matching.

In another exemplary embodiment of the invention, in the impairment analysis performed by the probe, the probe determines for each isochronous real-time packet stream, a number of consecutive packets that have not been received at the probe, i.e. the packet loss. Moreover, the probe also determines for each isochronous real-time packet stream, an impairment record of the current impairment analysis interval indicative of the type of an impairment, if present, based on the number of consecutive packets in sequentially correct order that have not been received at the probe.

The determination of the number of consecutive packets that have not been received at the probe (packet loss) may be for example based on the packets of the respective isochronous real-time packet stream received in the current impairment analysis interval and at least one impairment analysis interval prior to the current impairment analysis interval.

In a further exemplary embodiment of the invention, in the impairment analysis performed by the probe comprises, the probe determines for each isochronous real-time packet stream, a number of consecutive packets that have been received successfully at the probe in sequentially correct order. Furthermore, the probe determines for each isochronous real-time packet stream, an impairment record of the current impairment analysis interval indicative of the type of an impairment, if present, based on the number of consecutive packets in sequentially correct order that have been successfully received at the probe.

The determination of the number of consecutive packets in sequentially correct order that have been successfully received at the probe may be for example based on the packets of the respective isochronous real-time packet stream received in the current impairment analysis interval and at least one impairment analysis interval prior to the current impairment analysis interval.

According to another embodiment of the invention, the types of impairments of an isochronous real-time packet stream that can be detected by the impairment analysis may include:

- bandwidth problems of the communication network,

- problems in the implementation of the protocol stack providing the packets of the isochronous real-time packet stream,

- configuration problems related to packet prioritization, and

- problems related to service policy violations by use of unauthorized codec or packetization intervals.

In a further embodiment of the invention, the method further comprises tapping, by a network tap or switch, the packet streams to thereby obtain copies of the packets of the packet streams. If using a switch for tapping, copies of the packets may be for example available from a mirror port of the switch. Moreover, the copies of the packets of the packet streams are provided to the probe for performing the impairment analysis and the isochronous real-time packet stream-based conditional storage of packets of the isochronous real-time packet streams on a per impairment analysis interval basis.

In another embodiment, the probe is storing packets received in at least one subsequent impairment analysis interval following the current impairment analysis interval for isochronous real-time packet streams for which it has been decided to store the packets of the current impairment analysis interval.

When determining for each isochronous real-time packet stream whether to store or drop the packets of the isochronous real-time packet stream received within the current impairment analysis interval, the probe may for example decide to start storing packets of an isochronous real-time packet stream received within the current and subsequently following impairment analysis intervals. In this case, and in accordance with a further improved exemplary implementation, the probe may stop the storage of the packets of the isochronous real-time packet stream, if it is determined in one or more impairment intervals following the current impairment interval that the impairment causing the start of the recoding of the packets of the isochronous real-time packet stream is no longer present.

Alternatively, in another exemplary implementation, the probe stores packets of isochronous real-time packet streams for which it has been decided to store the packets of the current impairment analysis interval that are received at the probe in a configurable or predetermined number of subsequent impairment analysis intervals following the current impairment analysis interval.

In another embodiment of the invention, the probe decides to store the packets of a respective isochronous real-time packet stream, if impairment in the packets is detected in a predetermined or configurable number of impairment analysis intervals within an impairment analysis window. The number of impairment analysis intervals may be for example predetermined or configured to be the same for all isochronous real-time packet streams, or may be defined individually for each of the isochronous real-time packet streams. Alternatively or in addition thereto, the number of impairment analysis intervals may be for example predetermined or configured depending on the type of impairment.

Furthermore, in a more advanced exemplary implementation of this embodiment, if a trigger fired for a packet stream, the probe stores the packets of the respective isochronous real-time packet stream that have been received in the impairment analysis intervals of the impairment analysis window, in which the impairment has been detected. In some applications of the invention, and in case an impairment is detected within a packet stream, it may be desirable to not only store data packets of the packet stream within a current impairment analysis interval, but to also store packets of one or more impairment intervals preceding the current impairment analysis interval. For example, in case the isochronous real-time packet stream in which impairment is detected is an MPEG video stream, it may be desirable to store the last I-frame of the stream, so that an impaired video picture can be reconstructed when performing a post-processing analysis of the impairment based on the stored data packets of the video stream. Accordingly, in another embodiment of the invention, there is impairment analysis window defined that is covering a given number $N$ of impairment intervals indexed $k-N$ to $k$, wherein the impairment interval with index $k$ is the current impairment interval on which the impairment analysis is performed. The impairment analysis interval window can be for example implemented as a sliding widow. The highest impairment interval index within the impairment analysis interval window is that of the currently processed impairment interval.

In another embodiment of the invention, the probe may buffer the packets of each isochronous real-time packet stream received within the impairment result intervals of the impairment analysis window, and will store the packets of each isochronous real-time packet stream received within the impairment result intervals of the impairment analysis window, in case it is decided by the probe to store the packets within the current impairment interval.

Furthermore, the probe advances the impairment analysis interval window, so as to process the next packets of the isochronous real-time steams received in the next ($k$+1) impairment analysis interval to cover impairment intervals index $k-N$+1 to $k$+1, wherein the impairment interval $k$+1 is the next current impairment interval on which an impairment analysis is to be performed. The advancing of the impairment analysis interval window may be for example realized by dropping the packets of each isochronous real-time packet stream received in impairment analysis interval $k-N$ for which it has been decided not to store the packets within the current impairment interval.

Another aspect of the invention is extending the concept of packet capturing of individual isochronous real-time packet streams based on a real-time impairment detection performed on the individual isochronous real-time packet streams to scenarios, where a single session has more than one isochronous real-time packet streams. This may be for example applicable to video-conferencing systems, where there may be multiple video and audio streams in a single session. According to a further embodiment of the invention, the probe is therefore determining isochronous real-time packets streams belonging to one session. This may be for example realized by monitoring and/or analyzing control signaling related to the session comprised in packets received at the probe.

Based on the knowledge of which streams belong to one session, the probe may then capture the packets of the isochronous real-time packet streams of a given session, in case impairment is detected by the real-time impairment analysis in one of the session's isochronous real-time packet streams. Hence, according to another embodiment of the invention, the probe's decision to store packets of one of the plural isochronous real-time packets streams belong to the one session could trigger the storage of packets of all isochronous real-time packet streams belonging to the session for the current impairment analysis interval by the probe.

Alternatively, a single real-time impairment analysis may be performed on all isochronous real-time packet streams of the session received within a given impairment analysis interval, and capturing of the session's packets may be triggered based on the result of the impairment analysis performed on all isochronous real-time packet streams of the session.

Furthermore, it is another aspect of the invention to define trigger criteria (events or rules) based on the result (e.g. the impairment records) obtained from the impairment analysis that, when occurring or being fulfilled, trigger the storage of isochronous real-time packet stream(s). For example, according to one embodiment of the invention, the probe decides on the storage of the packets based on one or more (i.e. a combination of two or more) of the following metrics of the packets of the respective isochronous real-time packet stream:

- a payload type indicated in of the packets of the respective isochronous real-time packet stream,

- histogram of the inter-arrival time of the packets of the respective isochronous real-time packet stream received at the probe in sequentially correct order in one impairment interval or accumulated across plural impairment intervals,

- jitter of the inter-arrival time of the packets of the respective isochronous real-time packet stream across in one impairment interval or accumulated across plural impairment intervals,

- packet interval according to a time-stamp included in a header of the packets of the respective isochronous real-time packet stream in one impairment interval or accumulated across plural impairment intervals,

- number of consecutive packets of the respective isochronous real-time packet stream received at the probe in one impairment interval or accumulated across plural impairment intervals,

- number of lost packets of the respective isochronous real-time packet stream in one impairment interval or accumulated across plural impairment intervals,

- number of duplicated packets of the isochronous real-time packet stream in one impairment interval or accumulated across plural impairment intervals,

- interleaving level of the packets of the respective isochronous real-time packet stream received at the probe determined based on sequence information included in the header of the packets, and

- prioritization of the packets of the respective isochronous real-time packet stream in the communications network according to header information comprised in the header of the packets.

A further aspect of the invention is the selection of an appropriate length of the impairment analysis interval. In case the impairment detection is using a pattern detection in the metrics obtained by the impairment analysis from the received data packets, on the one hand, the length of the impairment analysis interval should advantageously ensure receiving a minimum number of packets per impairment analysis interval at the probe so as to allow reliable detection of impairment patterns in the packets of a given isochronous real-time packet stream. On the other hand the longer the impairment analysis interval, the lower the granularity of the impairment analysis and the more memory is required in the probe to buffer packets of the isochronous real-time packet streams received at the probe.

The number of packets of one stream arriving at the probe is dependent on the packet interval of the stream. Hence, in one embodiment of the invention, the length of the impairment analysis interval is selected based on the packet interval of the of the isochronous real-time packet streams. Considering as an example that today's media codecs use mostly packet intervals between 10 ms and 40 ms, the impairment analysis interval may have a length of 2.5 seconds to 7.5 seconds, preferably 5 seconds.

Furthermore, the impairment analysis interval may be the same for all isochronous real-time packet streams received at the probe. This may for example facilitate the correlation of impairment records of different isochronous real-time packet streams.

Another aspect of the invention is the implementation of the methods for storing packets of isochronous real-time packet streams in a packet-switched communications network according to the different embodiments of the invention described herein in hardware and software or a combination thereof.

Accordingly, one further embodiment of the invention is providing a monitoring probe for storing packets of isochronous real-time packet streams in a packet-switched communications network. The probe comprises a network interface card for receiving packets of plural packets streams including the isochronous real-time packet streams. Furthermore, the probe also comprises a volatile memory for buffering the plural packets streams or the isochronous real-time packet streams, and an impairment detection module for performing on an impairment analysis interval-basis an impairment analysis on the received isochronous real-time packet streams. The impairment detection module of the probe performs an impairment analysis that analyses packets of the respective isochronous real-time packet streams received at the probe within the current impairment analysis interval, to thereby obtain for each isochronous real-time packet stream and at the end of the current impairment interval an impairment record of the packets of the respective isochronous real-time packet stream. The impairment detection module may for example be implemented by means of a processor that is executing impairment analysis software, or by means of dedicated circuitry of the monitoring probe.

The probe's impairment detection module may further decide for each isochronous real-time packet stream and on an impairment analysis interval-basis, whether to store or drop the packets of the respective isochronous real-time packet stream received within the current impairment analysis interval, wherein the decision is based on the impairment record obtained for the respective isochronous real-time packet stream within the current impairment analysis interval. The probe may also comprise a non-volatile storage for storing the packets of the respective isochronous real-time packet stream received within the current impairment analysis interval in the volatile memory in response to the decision of the impairment detection module. Alternatively, the probe may also forward the packets of the respective isochronous real-time packet stream(s) to be stored to a storage network node (e.g. a storage system) within the network which is receiving and storing the packets on a non-volatile storage.

In case the packets of a stream are not to be stored, the probe's impairment detection module cause the deletion of the buffered packets of the respective isochronous real-time packet stream received within the current impairment analysis interval from the volatile memory. This deletion may be preformed in response to the decision of the impairment detection module.

In a further exemplary embodiment of the invention, the network interface card stores the plural packets streams or the isochronous real-time packet streams in a shared memory area of the volatile memory, which is directly accessible by an application performing the impairment analysis.

The monitoring probe according another embodiment of the invention is equipped with means to perform the method for storing packets of isochronous real-time packet streams in a packet-switched communications network according to one of the different embodiments of the invention described herein.

A further embodiment of the invention relates to a passive monitoring system comprising network tap (or a switch) for obtaining copies of the packets of plural packet streams, and for providing the copies of the packets of the packet streams to a monitoring probe, and the monitoring probe according to of the various exemplary embodiments described herein.

Another embodiment of the invention provides a computer readable medium storing instructions that, when executed by a processor of a monitoring probe, cause the monitoring probe to store packets of isochronous real-time packet streams in a packet-switched communications network. The probe is caused to store the packets by receiving packets of plural packets streams including the isochronous real-time packet streams, performing on an impairment analysis interval-basis an impairment analysis on the received isochronous real-time packet streams, wherein the impairment analysis analyses packets of the respective isochronous real-time packet streams received at the probe within the current impairment analysis interval, to thereby obtain for each isochronous real-time packet stream and at the end of the current impairment interval an impairment record of the packets of the respective isochronous real-time packet stream. The execution of the instructions by the processor may further cause the probe to decide for each isochronous real-time packet stream and on an impairment analysis interval-basis, whether to store or drop the packets of the respective isochronous real-time packet stream received within the current impairment analysis interval, wherein the decision is based on the impairment record obtained for the respective isochronous real-time packet stream within the current impairment analysis interval, and to store or drop the packets of the respective isochronous real-time packet stream received within the current impairment analysis interval based on the decision.

**BRIEF DESCRIPTION OF THE FIGURES**

In the following the invention is described in more detail in reference to the attached figures and drawings. Similar or corresponding details in the figures are marked with the same reference numerals.

Fig. 1          shows an overview on the different measurement concepts, particularly intrusive measurements and non-intrusive measurements,

Fig. 2          an exemplary monitoring setup of a passive non-intrusive monitoring solution deployed in a VoIP network, in which the invention may be employed,

Fig. 3          shows an exemplary protocol stack for a VoIP communication,

**Fig. 4** shows a schematic workflow of the quality analysis according to one exemplary embodiment of the invention,

**Fig. 5** exemplifies the histogram pattern of the inter-arrival time measured at the monitoring probe, in case of network congestion within the network,

**Fig. 6** exemplifies the histogram pattern of the inter-arrival time measured at the monitoring probe typical for end-point originated problems,

**Fig. 7** exemplifies the quality of plural RTP streams carrying VoIP traffic in 5second impairment analysis intervals as indicated by their corresponding quality data records,

**Fig.8** shows a single quality data record (QDR) according to an exemplary embodiment of the invention,

**Fig.9** highlights the processing of different isochronous real-time packet streams 1 to S on an impairment interval basis according to an exemplary embodiment of the invention,

**Fig.10** shows an exemplary implementation a packet capturing mechanism according to an embodiment of the invention using an impairment analysis window,

**Fig.11** shows an exemplary implementation a packet capturing mechanism according to an embodiment of the invention for an isochronous, real-time packet stream,

**Figs. 12** & **13** exemplify the buffering and dropping of packets received within an impairment analysis window according to one exemplary embodiment of the invention,

**Fig. 14** shows a session-based packet capturing for all streams of a session according to one exemplary embodiment of the invention,

**Fig. 15** shows the structure of an exemplary monitoring probe 1500 according to one embodiment of the invention, and

**Fig. 16** shows the RTP protocol header, as used by the RTP packets that belong to an RTP session.

## DETAILED DESCRIPTION OF THE INVENTION

The following paragraphs will describe various embodiments of the invention. For exemplary purposes only, most of the embodiments are outlined in relation to an IP-based communication system in which media sessions are provided by means of a real-time session protocol, such as the RTP protocol. The principles of the invention may be readily applied to packet-switched networks, where streaming media, such as telephony (voice calls), video, video teleconference applications, etc., is provided by means of isochronous packet streams using real-time session protocol. Also the use of the IP-protocol for the transport layer may not be mandatory, depending on the protocol stack being implemented.

Furthermore, it should also be noted that the different embodiments of the invention described in the following paragraphs will be mainly and only exemplarily outlined with respect to an implementation in a passive monitoring systems similar to that shown in Fig. 2. As mentioned in the previously herein, passive mid-point monitoring has advantages that make it easy to perform monitoring of real-time streams in almost any IP network, while being hardware and manufacturer independent.

For example, considering VoIP monitoring, no integration with VoIP network equipment is needed, and still the full view on all live VoIP calls performed is available for a full service monitoring solution. Even though mid-point monitoring may also have disadvantages, packet flow analysis at the monitoring probe allows to create specific packet flow patterns that may enable the distinction between certain network and end-point originated impairments, without the need to know what type of end-point is causing the problem. That way a high percentage of practically found VoIP impairments can be discovered.

One aspect of the invention is the definition of a new way to detect the quality of isochronous real-time streams, such as for example RTP streams, which are used to transport the media content, such as speech payload of a VoIP call or video and audio of a video-conference, within a monitoring probe of a passive, mid-point monitoring system. This quality detection is also referred to as impairment analysis herein. The impairment analysis may be performed in real-time on the packets of the isochronous real-time packets streams arriving at the probe. The impairment analysis is providing quality information (or impairment information) for the respective analyzed streams on an impairment analysis interval basis. This quality information obtained from the impairment analysis may be used for two different purposes.

Firstly, the quality information is used to create quality reports on every isochronous real-time stream received at the monitoring probe. The quality reports may be for example provided to the post-processing platform for overall quality reporting and statistics. This quality information may allow isolation of specific problems (impairments) found in today's networks. For example, if using the invention for VoIP quality monitoring, the information allows the identification of specific problems of a VoIP call.

The impairment analysis analyses packets of the respective isochronous real-time packet streams received at the probe within the current impairment analysis interval, and produces for each isochronous real-time packet stream an impairment record (also referred to as a quality data record (QDR) or quality report herein) of the packets of the respective isochronous real-time packet stream. The impairment record for the respective streams is generated at the end of the respective impairment interval.

An impairment record for an isochronous, real-time packet stream is indicative of whether the impairment analysis revealed impairment in the data stream or not. An impairment record may for example comprise different statistics/metrics of the packet stream within the current impairment analysis interval and optionally further statistics/ metrics determined across the current impairment interval's boundary (e.g. on the basis of multiple impairment analysis intervals), e.g. by considering previous impairment records of the respective isochronous real-time packet streams.

Secondly, the quality information and/or the impairment records obtained from the impairment analysis can be used by the monitoring probe to trigger packet capture only for specific isochronous real-time streams, for example of those packet streams which experience specific quality degradations. One or more triggers may be defined. A trigger may be one or more rules or events that, when encountered or fulfilled, cause a probe to start (or stop) capturing packets of an impaired isochronous, real-time packet stream (or multiple isochronous real-time packet streams belonging to a single session).

The trigger(s) deciding on whether to start packet recording may also be checked in real-time, i.e. on an impairment analysis interval basis, for each of the isochronous, real-time packets streams received at the probe, so that in each impairment analysis interval the probe decides for each received isochronous stream, whether to capture the packets of the respective isochronous real-time packet stream or not. If the packets of an isochronous real-time packet stream are not to be captured, the probe may drop (i.e. discard) at the end of the current impairment analysis interval.

This way the required processing and storage capacity needed to evaluate the isochronous real-time streams can be kept to an economic minimum such that the software for passively probing the traffic at the probe may be for example run on "affordable" standard server hardware. As a result, network wide monitoring of isochronous real-time packet streams can be realized. Therefore, using the invention described herein, VoIP service providers may for example implement network wide VoIP quality monitoring at economically reasonable costs, which otherwise would only be possible at high cost with specialized hardware based monitoring solutions.

Especially for commercial customers where service level agreements (SLAs) have been put into force, there is a high demand to fully understand service degradations. For example, for the quality degraded VoIP calls, it may be very important for the customer as well as for the operator to have the captured packet flow trace as evidence in case of lawsuits over penalty payments. This invention may allow customers as well as operators to fully monitor all of their VoIP calls, as well as to capture the packet flows for the impaired calls only.

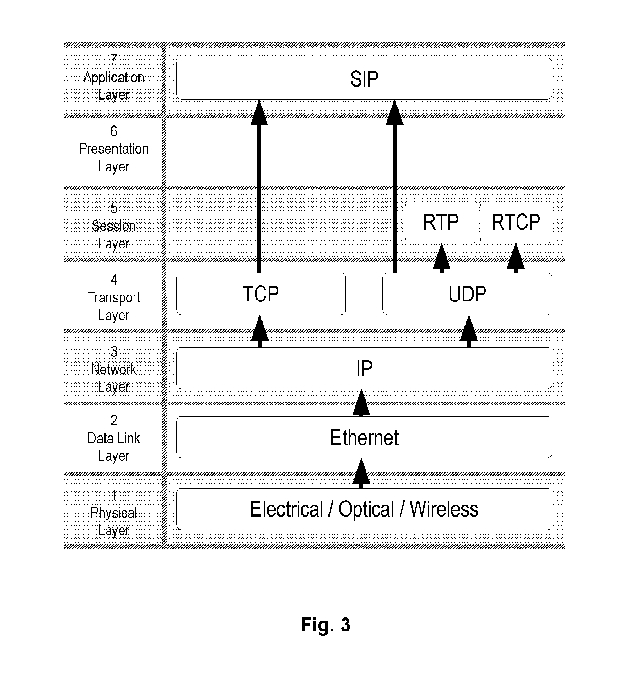

In the following outline of the schematic workflow of the quality evaluation will be exemplarily outlined with respect to a passive mid-point monitoring scenario. In the following it will be assumed for exemplary purposes only that the monitored isochronous real-time packet streams are VoIP streams that are transported by means of the RTP protocol using the protocol stack as shown in Fig. 3.

Fig. 3 shows one exemplary protocol stack for a VoIP communication. The protocol stack may for example include RTP/RTCP in the session layer (see Schulzrinne et al., "RTP: A Transport Protocol for Real-Time Applications", IETF RFC 3550 and IETF RFC 5506, available at http://www.ietf.org), UDP in the transport layer (see J. Postel, "User Datagram Protocol", IETF RFC 768, available at http://www.ietf.org) and IP in the network layer (for IP version 4 see Defense Advanced Research Projects Agency (DARPA), "Internet Protocol", IETF RFC 791; and for IP version 6 see Deering et al., "Internet Protocol, Version 6 (IPv6)", IETF RFC 2460). Please note that optionally TCP (see DARPA, "Transmission Control Protocol", IETF RFC 793 and Braden, "Requirements for Internet Hosts - Communication Layers", IETF RFC 1122 and updates thereof) could be used in the transport layer, however, for real-time traffic UDP is commonly used. On the session layer, it is assumed that SIP (see Rosenberg et al, "SIP: Session Initiation Protocol", IETF RFC 3261, available at http://www.ietf.org) is used for session initiation signaling. The protocol stack in Fig. 3 is shown only for exemplary purposes to better understand the following implementation examples herein.

As shown in Fig. 2, passive mid-point monitoring can be deployed anywhere in the network where VoIP traffic is transferred. In case the VoIP streams are tapped - e.g. to avoid the passive monitoring to have impact on the actual VoIP packet flow - a special device may be used that is creating a copy of every packet transferred on the network. This device is called a test access port (TAP) and forwards a copy of every packet to the monitoring probe. For example, a switch may also implement the functionality of a TAP, where a copy of the network traffic is usually available from the mirror port of the switch. However, the TAP may also be implemented by hardware having the desired dedicated functionality. The probe performs a packet flow analysis on the packets arriving at its network interface, and detects impairments that may affect the speech quality of the VoIP streams.

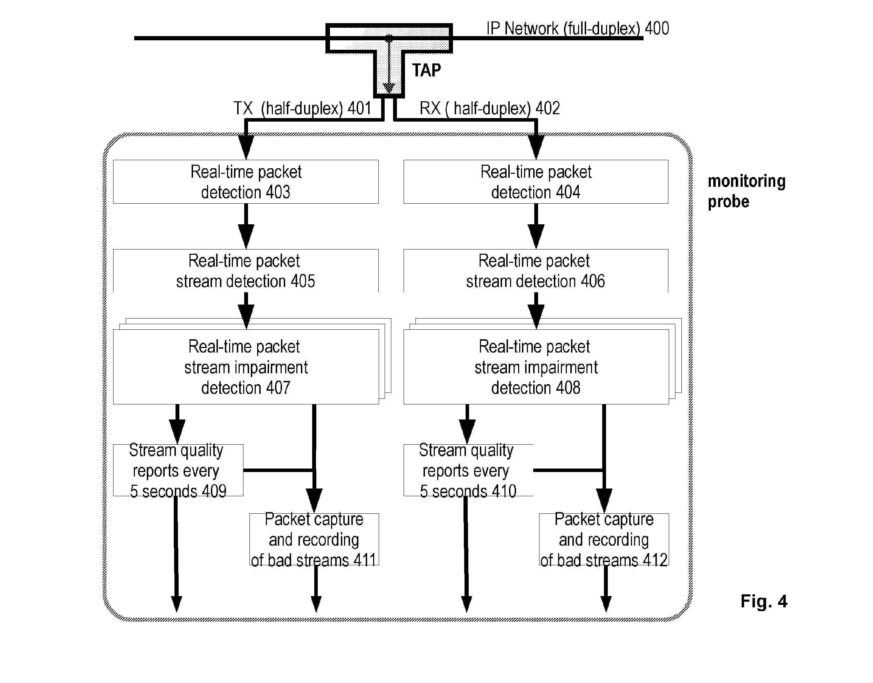

Fig. 4 shows the schematic workflow of the quality analysis according to one exemplary embodiment of the invention. The packets arriving at the probe may have been tapped by a TAP. As exemplarily illustrated in Fig. 4, the TAP may optionally separate the full-duplex communication 400 on the network into two half-duplex communications (TX 401 and RX 402 in Fig. 4) that are passed to the monitoring probe. In this latter case, the monitoring probe may for example analyze the respective half-duplex communications RX 401 and TX 402 individually. The quality evaluation of the packets arriving at the probe may be broken down to three basic steps and functions.

First, the probe performs a filtering of the packets arriving at the network interface card of the probe in order to identify the different isochronous real-time packet streams contained therein. For example, considering the VoIP monitoring example discussed above, the monitoring probe may filter for RTP packets first and then detects the packets that belong to the same RTP stream. This is shown in Fig. 4, where in a first step real-time packets of the two half-duplex communications 401, 402 arriving at the monitoring probe are detected (Real-time packet detection 403, 404) and in a further step the real-time packets are associated to respective real-time stream (Real-time packet stream detection 405, 406). Please note that the real-time packet detection and the real-time packet stream detection may also be implemented in a single step.

This packet stream detection may be for example implemented in a stream detection module, which may be for example a piece of software executed by a processor of the monitoring probe. In a more advanced exemplary implementation the stream detection module of the monitoring probe also evaluates session signaling so as to relate the real-time packets streams to their sessions. The monitoring probe may also filter session signaling packets and provides them to the stream detection module, which uses this signaling information to identify among the real-time packet streams those belonging to a single session.

Upon identification of the individual isochronous real-time packet streams arriving at the probe, the probe applies a special real-time analysis to detect impairments in the respective isochronous real-time packet streams (Real-time packet stream impairment detection 407, 408). This impairment detection may also be implemented by means of an impairment detection module, which may be a piece of software executed by a processor of the monitoring probe. The impairment analysis is performed on a time slot basis. The time slots, the so-called impairment analysis intervals, have a pre-defined or configurable duration, e.g. 5 seconds. The impairment analysis analyzes all packets of an isochronous real-time packet stream arriving at the probe within an impairment analysis interval and outputs 409, 410 a quality report for the respective isochronous real-time packet stream for the currently analyzed impairment analysis interval.

The impairment analysis is performed for all identified isochronous real-time packet streams in parallel. Hence, if the impairment analysis interval is set to x seconds, the impairment detection module of the monitoring probe produces a quality report for each isochronous real-time packet stream every x seconds. In this example, the impairment analysis intervals for all isochronous real-time packet streams are aligned so as to simplify the detection of correlations in the impairment of the isochronous real-time packet streams at a later point in time, e.g. when post-processing the quality reports. However, this is not mandatory. Alternatively, the length of the impairment analysis interval may be pre-defined or configured for each isochronous real-time packet stream individually, for example based on the media type transported by the packet stream (e.g. audio or video). This may be for example advantageous if the different isochronous real-time streams have different packet inter-arrival times - e.g. in case of using different configurations of media codecs or using different media codecs with different packet inter-arrival times.

The quality reports may be stored for each impairment interval and isochronous real-time packet stream irrespective of whether impairment is detected or not (not shown in Fig. 4). This may facilitate a further post-processing as already indicated above. Furthermore, the information on the quality of a given isochronous real-time packet stream within a previous impairment analysis interval may also be useful in determining parameters of an isochronous real-time packet stream that may span multiple impairment analysis intervals, e.g. the number of consecutive packets of the packet stream received in sequentially correct order, or the number of packets of the packet stream lost, i.e. that have not been received at the probe. Hence, some information in the quality reports of the current impairment analysis interval may be based on information (of the quality reports) of one or more previous impairment analysis intervals.

Based on the information of one or more quality reports (including the quality report for the current impairment analysis interval) produced for a given isochronous real-time packet stream, the monitoring probe may determines whether there is an impairment in the isochronous real-time packet stream. When analyzing for example a VoIP call, the monitoring probe decides whether the quality information obtained for the packet stream of the VoIP call yields a degradation in the speech quality that is exceeding some threshold criterion or criteria (or not). For example, this criterion or criteria may be a violation of service level agreement thresholds for maximum jitter and/or packet loss. If so, a trigger may be fired and caused a recording of packets of the packet stream of the VoIP call.

Once the packets of the stream received in an impairment analysis interval have been processed and the quality report has been generated 409, 410 by the impairment detection module, they are discarded to save memory, unless the impairment detection indicates some quality problem with the isochronous real-time stream. In this latter case packet recording is triggered, and the probe stores 411, 412 the packets of the impaired isochronous real-time stream that have been received in the current impairment analysis interval.

Please note that in some embodiments of the invention described herein, the trigger criterion or criteria for triggering the recording of the packets of a packet stream may for example require an event occurring more than a configurable number of times within a given impairment analysis window and the recording of all packets of the given packet stream of all impairment analysis intervals within the time window. Hence, the detection of impairment may not lead to an immediate storage of the packets of an impaired packet stream, but the monitoring probe may buffer the packets until a final decision on whether or not to record the packets is made based on the trigger criterion/criteria. As will be outlined below in further detail, this may be for example implemented using a sliding window technique.

The impairment analysis window spans only a limited number of impairment analysis intervals. The size of the impairment analysis window may for example depend on the amount of volatile memory (RAM) available in the monitoring probe, i.e. swapping of the packets to a local permanent storage in the monitoring probe is avoided. The number of impairment intervals in the impairment analysis window is this dependent on the duration of the impairment analysis intervals and the amount of volatile memory. For example, for video capture of an MPEG stream, as will be outlined below in further detail, the I-Frames are provided at maximum in 30-second intervals. Hence, the impairment analysis window should span at maximum 30 seconds.

In the following sections, the individual steps performed by the monitoring probe of a passive, mid-point monitoring system, starting with the packet reception of streams at the probe, will be outlined in further detail and different implementation examples and alternatives according to different embodiments of the invention will be described.

**Packet Reception at the Monitoring Probe**

As outlined above, one of the advantages of the proposed invention is that it may be implemented on standard server hardware, while line-rate packet processing is still possible. In one exemplary embodiment of the invention, special network interface cards may perform the packet capturing from the physical layer interface, also known as packet capture cards. These cards place each received packet (e.g. Ethernet packet or IP packet) into a shared memory segment of the server (i.e. the monitoring probe), and then notify the analyzer software about the arrival of the new packet. The analyzer software can then access the packet directly in the shared memory segment.

This approach is also called zero-copy and reduces the overall system load of packet processing by the operating system to an absolute minimum, because the operating system is not at all involved in the processing of the packets arriving at the physical layer interface. This way it can be ensured that the major part of the processing power of the server hardware is available to the processing of the packet streams, i.e. impairment analysis and packet capture functionality of the monitoring probe.

**Identification of Packet Streams**

Once the packets of the various packet streams have been received by the network interface card of the probe, they are forwarded to a stream detection module (which may be for example a piece of software) that is identifying the isochronous real-time packet streams packets of which arrive at the probe.

In this example, the stream detection module may use the information from the IP, UDP and RTP headers to determine to which RTP packet stream a respective packet belongs. In particular the following information in the packet headers is used:

- the Source IP address from IP header,

- the Destination IP address from IP header,

- the Source port from UDP header,

- the Destination port from UDP header, and

- the SSRC (Synchronization SouRCe) from RTP header.

Please note that this information is available in IP version 4 as well as IP version 6 protocols. Using the above fields from the headers of each packet it is possible to uniquely match a received packet to a specific RTP packet stream. The identification of the individual packet stream is advantageous as it allows for considering jitter, out-of-sequence packets, or packet loss in the context of individual RTP packet streams, which are part of a VoIP call.

In one further exemplary implementation, a hash value (e.g. 64 bit) is calculated from the information within the five above mentioned header fields. This hash value is then used as a unique identification of a respective packet stream.

It should be noted that the identification of packet streams within the packets arriving at the probe may also be possible if other protocol stacks than the protocol stack shown in Fig. 3 and discussed above are used. For example, if considering other real-time media sessions than VoIP, it is possible to use another session protocols than RTP and also other protocols than UDP or IP could be used in the transport layer and network layer, while still being able to identify packets that belonging to one isochronous real-time packet stream. In order to facilitate real-time delivery of the media traffic, the session protocol needs to support isochronous real-time transmission of the media packets and should further allow identification of the order of packets (e.g. by means of sequence numbers or time stamps). The possibility to detect packet order allows the detection of - for example - packet loss, in-sequence delivery, out-of-sequence delivery, and packet duplication, which provide important information as to the error cause in a real-time packet stream.

If using a TAP to separate the Ethernet link under test, into its bidirectional parts (half-duplex), each part provides the packet transport for one unidirectional connection between the parties of a VoIP call. This means that the two legs of a call will be separated on the two monitoring links provided by the TAP. According to another embodiment of the invention, the monitoring probe implements at least some basic processing of the session related signaling.

A VoIP session may for example also be advanced into a multimedia call including video, which means that multiple packet streams carrying voice and video data can belong to the same session ("call"). One can exemplarily assume that VoIP and video calls over the Internet will be setup via signaling protocols like SIP. Signaling protocols introduce the session end-points to each other (e.g. the parties of the VoIP call), which means the end-points do receive among other information, the destination IP address and port to which they must send their packets of the session protocol carrying the speech or video payload. For example, SIP may use the Session Description Protocol (SDP) for this purpose (see Handley et al., "SDP: Session Description Protocol", IETF RFC 4566, available at http://www.ietf.org), which allows the signaling of various parameters related to the session as such and the session end-points. Other signaling protocols for session management that contain relevant information on the packet streams belonging to a single session are ITU-T H.323 (see http://www.itu.int/rec/T-REC-H.323) or proprietary protocols like Cisco Skinny (see http://www.cisco.com/en/US/tech/tk652/tk701/tk589/ tsd_technology_support_sub-protocol_home.html).

By identifying session related signaling packets within the packets arriving at the probe and analyzing their contents, the stream detection module of the monitoring probe can obtain this session information, and may identify potentially multiple packets streams that belong to a single media session. The processing of session signaling information may be for example implemented based on existing signaling processing implementations like pjsip (see http: //www.pjsip.org) or sofia-SIP (see http://sofia-sip.sourceforge.net).

In a further exemplary embodiment of the invention, the stream detection module of the probe identifies the different packet streams belonging to a single media session and uses this information to not only record packets of a single impaired packet stream of a session, but to trigger the recording of all packet streams that belong to the same session.

In one exemplary implementation, the impairment detection module may be communicatively coupled with the stream detection module of the probe. The impairment detection module may notify the stream detection module analyzing the session signaling about the start of packet recording of an impaired packet stream of a session. For example, the impairment detection module may provide the IP addresses of the communication end-points and port of the impaired packet stream. The stream detection module may link this information to an active session (or call) and notifies the impairment detection module to start recording of packets of all other packet streams that belong to the same session as the impaired packet stream. This way all packets that belong to the same session will be recorded and are thus available for further analysis and troubleshooting.

**Impairment Analysis**

As indicated previously, the impairment analysis (or impairment detection) is an important aspect of this invention. The results of the impairment analysis are used to trigger packet recording for problematic isochronous real-time packet streams. This is a major improvement over other analysis tools available today, which either require expensive specialized hardware to perform this task, or are able to capture the packets but analysis will be done as a post processing step at a later time, which doesn't qualify for 24/7 real time passive non-intrusive service monitoring requirements from operators.

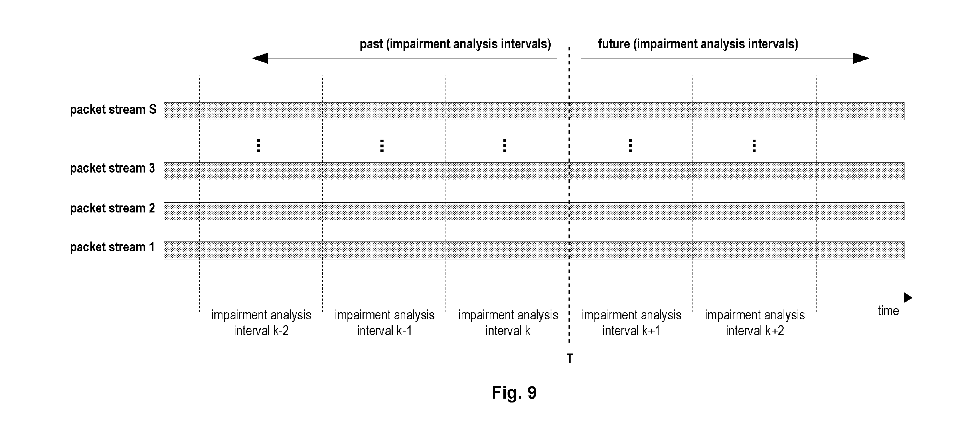

One important feature of the impairment analysis is the creation of quality reports (impairment records) for the isochronous real-time packet streams received at the monitoring probe in given intervals, the impairment analysis intervals. Fig. 9 exemplarily highlights the processing of different isochronous real-time packet streams I to S on an impairment interval basis. The packet streams are slotted into time-slot (impairment analysis intervals), wherein the impairment analysis interval on which the impairment detection module currently performs its impairment analysis is referred to as the current impairment analysis interval and is given the index $k$ (for exemplary purposes). Accordingly, impairment analysis intervals having an index $i<k$ are past impairment analysis intervals, while impairment analysis intervals having an index $i>k$ denote impairment intervals in the future. In Fig. 9, the pint in time $T$ denotes the end of the current impairment analysis window at which the quality record for the current impairment analysis interval $k$ is output.

For example, for VoIP call monitoring, the impairment analysis intervals may be for example 5-second intervals for every RTP packet stream being monitored by the probe. When using the codec G.711 (see http://www.itu.int/rec/T-REC-G.711) with a packet interval of 20 ms, an impairment analysis interval of 5 seconds would yield the reception and processing of 250 packets for every RTP packet stream (assuming no packet loss). Based on this assumption, the required amount of memory required for line-rate packet processing of a 1GB Ethernet link in the monitoring probe in libpcap format (see http://www.tcpdump.org) can be calculated based on the following exemplary parameters of a VoIP telephone call:

- 24 Byte packet header in libpcap format on 64-Bit operating system

- 214 Bytes for one RTP packet (G.711 / 20 ms)

- 250 packets for one RTP stream within a 5 second interval

- 2 RTP streams are at least required for one VoIP call (bidirectional call)

- 10500 concurrent streams is the maximum that can be transferred in one direction at line-rate using the mentioned codec and packet interval

With these assumptions the resulting memory requirement for the monitoring probe is calculated as follows:

$$(24 + 214) * 250 * 2 * 10500 = 1249500000 = 1.16\ GByte$$

Hence, just 1.2 GByte of RAM is sufficient to temporarily store all RTP packets received by the monitoring probe on the network within a given impairment analysis interval, which is an amount of memory that can be expected available in server hardware. This also yields that it may also be possible to temporarily store packets of all RTP packets received by the monitoring probe on the network within a several impairment analysis intervals.

With high compression VoIP codec's like the G.729 (see http://www.itu.int/rec/T-REC-G.729), many more calls can be concurrently transferred on a single 1 GB Ethernet link. The G.729 codec does compress multiples of 10 ms of speech resulting in a codec sample of 10 Bytes. If the codec samples are transferred in a packet interval of 20 ms, two codec samples will be placed into the payload of a single G.729 RTP packet, resulting in a payload size of just 20 bytes (see for further information "Voice Over IP - Per Call Bandwidth Consumption", Cisco Document ID: 7934, available at http://www.ciscosystems.com/application/pdf/paws/7934/bwidth_consume.pdf). The total size of a single packet will therefore be reduced to 74 Bytes. The smaller packet size does allow for about 30000 concurrent VoIP calls on a 1GB Ethernet using this codec. With this information we are now able to use the previous formula to calculate the required maximum storage capacity on the probe for a 5 second impairment analysis interval:

- 24 Byte packet header in libpcap format on 64-Bit operating system

- 74 Bytes for one RTP packet (G.729 / 20 ms)

- 250 packets for one RTP stream within a 5 second interval

- 2 RTP streams are at least required for one VoIP call

- 30000 concurrent streams is the maximum that can be transferred in one direction at line-rate using the mentioned codec and packet interval

With these assumptions the resulting memory requirement for the monitoring probe is calculated as follows:

$$(24 + 74) * 250 * 2 * 30000 = 1470000000 = 1.34\ GByte$$

Therefore, also for VoIP monitoring using high compression codecs the required storage is just slightly higher than in the previous example. Hence, standard server hardware is therefore sufficient to temporarily store the expected number of RTP packets per impairment analysis interval in memory even with high compression codecs.

*Selection of the Impairment Analysis Interval*

Staying at the example of VoIP monitoring, after RTP packet detection and RTP packet stream recognition, the packets of the RTP packet streams are temporarily stored at the probe, e.g. in a list for every RTP packet stream. The packets may be stored in the order of arrival at the capture card. The size of the packet list for each stream should be dynamic to be able to handle different packet intervals practically found in VoIP networks.

For VoIP, the smallest packet interval presently defined is 10 ms, which would result in a packet list of 500 packets per RTP packet stream when assuming an impairment analysis interval of 5 seconds. Larger packet intervals will cause a shorter packet lists.

Table 1 provides an overview about the optimal number of packets available for impairment detection in a 5 second impairment analysis interval:

| RTP stream packet interval [ms] | Number of packets in 5 second interval |
|---|---|
| 1 0 | 5 0 0 |
| 4 0 | 1 2 5 |

**Table 1**

Another approach is to keep the number of packets for impairment analysis at a constant level, and to adjust the impairment analysis interval based on the packet interval as shown in Table 2.

| RTP stream packet interval [ms] | Length of impairment detection interval [s] for 250 packets |
|---|---|
| 1 0 | 2 . 5 |
| 4 0 | 1 0 . 0 |

**Table 2**

In one embodiment of the invention, a fixed impairment analysis interval for the impairment analysis of the isochronous real-time streams at the probe may be advantageous for several reasons. Using a fixed impairment analysis interval may be advantageous because the packet interval is not necessarily known upon the first received packets of a RTP packet stream. Furthermore, if using pattern recognition for detecting impairment of the RTP packet streams, for example a fixed 5-second impairment analysis interval yields a certain number of packets per impairment analysis interval required for a reliable detection of patterns within the received packets of a RTP packet stream. Moreover, the number of quality data records (impairment records) for the monitored streams is kept at an optimal number of generated quality data records, which can be processed for statistics later on. Further, the number of quality data records should also be kept optimal in terms of granularity/resolution of in-call information and database size when quality data records are stored.

For example, if a 10 ms packet interval would be used by the codec instead of 20 ms, the number of generated quality records would double. Post processing of impairments that span multiple calls may also easier because quality data records created in the same interval can be easier compared with one another.

The use of a variable impairment analysis interval selected based on the packet interval of the streams may be advantageous as this would allow ensuring that always enough RTP packets will be available for the pattern recognition algorithm used to identify specific end-point or network related VoIP quality degradations. The packet intervals to be used for the RTP packet stream(s) of a session may be for example learned by the stream detection module of the probe from session signaling such as SDP packets, which may contain information on the media codec(s) and their rates. Accordingly, in one exemplary implementation, the stream detection module detects the packet interval of the one or more packet streams belonging to a session and the impairment detection module of the probe may set the impairment analysis interval accordingly for each of the packet streams.

It should be noted though that the longer the impairment analysis interval, the lower the granularity of the impairment analysis and the more memory is needed at the monitoring probe to temporarily store the packets of the isochronous real-time streams. Therefore, impairment analysis intervals longer than 10 seconds appear not advantageous.

Practical experience has further shown that even with higher packet intervals practically found in today's real-time communications, the 5 second impairment analysis interval does provide a sufficient number of packets of an isochronous real-time stream per impairment analysis interval that can be used for (reliable) pattern recognition of stream impairments. The minimum number of packets required for (reliable) pattern recognition within the inter-arrival time histogram is approximately 40 packets. If at least 40 packets have been received, sender related conformance violations or network related problems like bandwidth limitations could be identified in the histograms of the inter-arrival-time that may be provided by the quality data record. With 5-second intervals, even the largest packet interval of 90 ms used by codec ITU-T G.723, would still result in about 55 packets and provides therefore enough data to perform pattern recognition. According to an embodiment of the invention, the impairment analysis interval is 5 seconds for all packets streams. This is also exemplarily shown in Fig. 9, where the impairment analysis intervals for the different packet streams are aligned. By using this 5-second impairment analysis interval, the probe is capable of providing highly detailed in-call quality analysis, while memory consumption is kept to an economically reasonable size that can be handled by standard server hardware.

*Impairment Detection*

Upon the packets having been sorted and buffered per individual isochronous real-time stream, the packets will be sequentially fed into the impairment analyzer that performs a per-packet stream impairment analysis. The impairment analyzer may be for example implemented in software (impairment detection module). The impairment analyzer determines first metrics/parameters from the packets of the respective packet streams that may yield the respective stream's quality. The impairment analysis performed the impairment detection module may determine for each packet of a packet stream the following parameters/metrics in real-time:

- payload type (indicated in the packet header of a packet),

- packet sequence number (indicated in the RTP header),

- class of service and/or DiffServ code point (DSCP) (determined from the IP-header of the packet),

- the packet interval (determined from RTP time stamp of two RTP packets received in sequentially correct order),

- verification of a correct relation between packet interval, media codec, packet sequence number and the RTP time stamp,

- inter-arrival time (determined relative to the previous packet, if the current packet and previous packet are received in sequentially correct order), and

- the jitter of the packet relative to the isochronous inter-arrival time assumed for the respective stream.

The expression sequentially correct order means that the respective parameter is only determined for those packets that are received in correct order. The correct order can be for example determined from the packet sequence number in the RTP header of the respective packets, or the time stamps included in the RTP header. In the verification of the metrics packet interval, media codec, packet sequence number and the RTP time stamp, it is checked whether the packet interval, i.e. the time stamp increment in packets of sequentially correct order is matching the increment/ packet interval of the media codec.

Based on the sequence numbers of the packets, the packet order (number of out of order packets), number of duplicate packets and/or number of subsequently lost packets can be determined for the isochronous real-time packet stream. Please note that these metrics may actually extend beyond the boundaries of a current impairment analysis interval (e.g. if all packets of a packet stream of plural impairment analysis intervals are successfully received).

Based on the inter-arrival times of the packets of a stream received within the impairment analysis interval, the impairment detection module may further determine an inter-arrival-time histogram for the impairment analysis interval (e.g. with 5 ms buckets covering a inter-arrival time range from 0 ms to 100 ms). Based on this inter-arrival-time histogram for the impairment analysis interval a pattern recognition may be performed to detect specific impairments of a respective isochronous real-time packet stream as will be outlined below in further detail,

Further metrics may be calculated/determined for the respective isochronous real-time packet streams within each impairment analysis interval and may be included into the quality report of the stream for each impairment analysis interval. These further metrics may for example include one or more of the following parameters:

- VoIP end-point, e.g. the IP address of the packet stream,

- MOS / R-Factor,

- Sender related conformance problems,

- Bandwidth limitation (packet buffering),

- VoIP service policy violations,

- the number of packets on which the QDR is based,

- minimum, average, and/or maximum jitter, and

- "user experience" metrics such as MOS or R Factor.

VoIP service policies may for example specify given combinations of metrics, such as media codec, packet interval, DSCP to be used, usage of comfort noise and/or silence suppression. The quality records, respectively the quality information from the impairment analysis may be used to determined policy violations in the respective impairment analysis intervals.

The detection of impairment in the isochronous real-time packet streams by the impairment detection module of the passive mid-point monitoring probe suggested herein is exploiting the circumstance that the session protocol is a real time protocol that outputs packets carrying the media payload to be send in constant isochronous intervals. Deviations of the isochronous intervals are used to identify sender and network originated problems that may or may not have an auditable and/or visual impact on the user. When certain deviations are to be considered critical may be for example configured via threshold. The monitoring results offer indications about threshold violations via bit flags and counters. As will be outlined below in further details, flags and counters can be used as a trigger or trigger criterion for the packet recording. Because of the high granularity provided by using relatively short impairment analysis intervals (e.g. 5 seconds), for many media applications it is sufficient to only temporarily buffer the packets received within the impairment analysis interval currently analyzed by the impairment detection module to have full coverage of a detected problem.

Pattern *Recognition*

According to one further exemplary embodiment of the invention, once all packets received within an impairment analysis interval have been analyzed, the impairment detection module of the probe performs a pattern recognition based on the inter-arrival time histogram, which allows identifying specific problems of the analyzed packet stream. The pattern recognition may for example allow the detection of bandwidth problems in the transport network, non-standard implementations of the RTP stack in VoIP end-devices, configuration problems related to packet prioritization and/or problems related to service policy violations by use of unauthorized codec or packetization intervals. The result of this pattern recognition (optionally in combination with further metrics, events or rules) may be used to trigger the capture of packets of a isochronous real-time packet stream as will be outlined further down below in more detail.

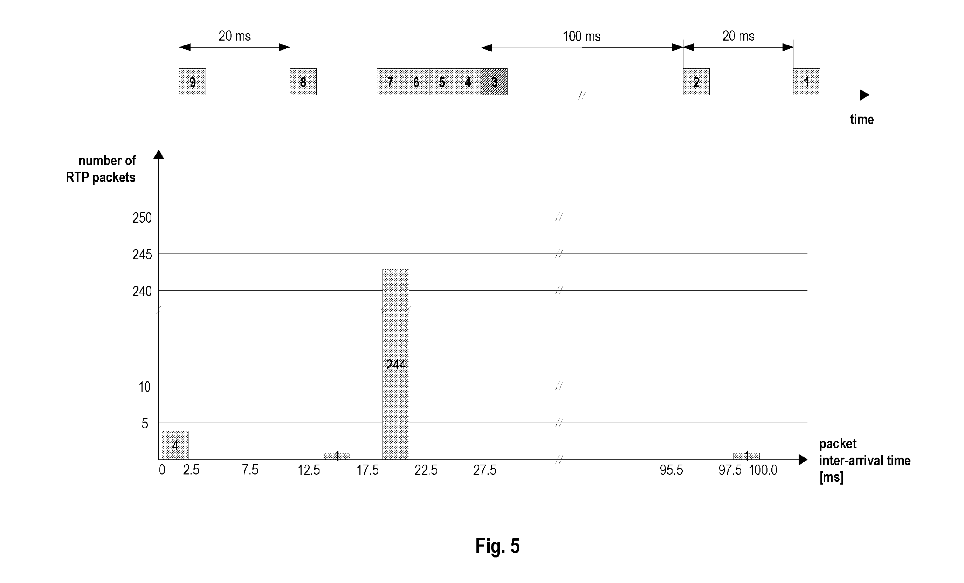

In the following, some examples will be outlined how pattern matching can be used to detect specific problems existing in a media session. Fig. 5 shows an example of a pattern recognition performed on an inter-arrival time histogram of an isochronous real-time packet stream experiencing bandwidth limitations in the transport network. If a network segment is experiencing bandwidth limitations, it may not forward the IP packets of the packet stream as desired. Instead, the packets are buffered until bandwidth is available for the transmission to the next network hop. Due to the buffering, packets will be delayed. In Fig. 5 packet number 3 is delayed so that at the monitoring probe a gap between packet 2 and packet 3 is detected which is caused by buffering in some network component. Since the delay is almost 100 ms, the impairment detection module increments the counter for the bucket "97.5-100 ms" in the inter-arrival histogram of the packet by one.

Due to real-time nature of the packet stream, packets can be supposed to be sent at a constant isochronous packet interval. For exemplary purposes, a 20 ms packet interval can be assumed, which means that during the 100 ms delay between packet 2 and packet 3 as shown in Fig. 5 other packets that belong to the same stream will already be available somewhere in the packet buffer of the network component experiencing the bandwidth limitation. If bandwidth becomes sufficiently available, the network component in question does send out all packets of the packet stream from its buffer as quickly as possible, so that it can empty it's buffer. Since the network component is not aware that the buffered packets do require a fixed packet interval of e.g. 20 ms, the original packet interval of 20 ms is now reduced to a few microseconds.

In a 100 ms time frame, it can be expected that a maximum of five packets of the packet stream arrived for forwarding at the network component. In Fig. 5 this is shown for packet 3 to 4, 4 to 5, 5 to 6, and 6 to 7. These packets will have very small inter-arrival times that are recorded in the inter-arrival histogram in the bucket "0-2.5 ms". If the histogram contains items in the very first (i.e. very low packet inter-arrival times are detected for packets of the current impairment analysis interval) and the very last bucket (i.e. very high packet inter-arrival times are detected for packets of the current impairment analysis interval), it can be concluded from this pattern that some packets of the isochronous real-time packet stream have been buffered in the transport network - most likely due to bandwidth limitations in the transmission path of the packets.

Another example for a pattern in the histogram the packet inter-arrival times is some sort of rhythmic behavior being present therein. It is highly unlikely for the transport network to introduce such kind of behavior, since the transport network is protocol transparent. Because of this transparency, the network does not know that real-time traffic, e.g. VoIP packets, is sent in isochronous intervals from sender to receiver. Because of this protocol transparency in the transport network, it is possible to classify rhythmic patterns in the inter-arrival time of the packets to be end-point originated, which means the sender introduced a non-isochronous packet transmission interval, causing the rhythmic inter-arrival times that can be monitored at the monitoring probe. For isochronous packet streams, a rhythmic pattern in the inter-arrival time histogram is thereof a unique indicator for a sender conformance violation, since the packet interval is no longer isochronous with a fixed interval. Fig. 6 shows an exemplary rhythmic inter-arrival time behavior of RTP packets, which cause the shown pattern in the histogram. In this example, the sender is sending the packets of the real-time stream in a non-isochronous manner with 15 ms and 25 ms packet intervals instead of an isochronous 20 ms packet interval.

For a more detailed discussion of pattern recognition of real-time packet streams, it is referred to WO 2007/020182 A1 published Feb. 22, 2007, which is incorporated herein by reference.

*Contents of the Impairment Records*

As mentioned above, a variety of metrics specific to the packets of a packet stream received within a current impairment analysis interval and of the packet stream in general may be obtained in the impairment analysis. These metrics may be all or partly recorded in the impairment records produced for the respective analyzed isochronous packet streams. A quality data record (QDR) is compiled for every isochronous packet stream each impairment analysis intervals offering a wide variety of metrics that can be used to trigger packet recording. The following list exemplifies a list of metrics that may be included in a quality data record:

- VoIP end-point(s) (IP address(es))

- Payload type

- DSCP class

- Packet interval

- Packet loss

- Duplicate packets

- Out of sequence packets

- Jitter

- MOS / R-Factor

- Sender related conformance problems

- Bandwidth limitation (packet buffering)

- VoIP service policy violations

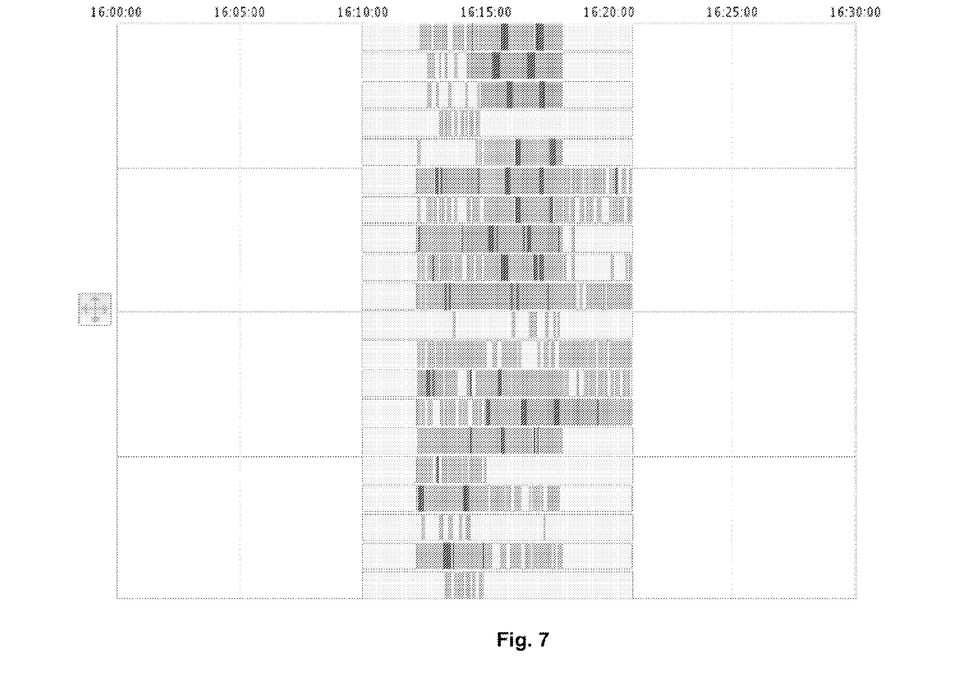

All of these values can be used to trigger packet recording, which is the foundation of the invention. Being able to analyze and offer a VoIP quality metric in real-time. Furthermore, in one embodiment of the invention, the quality data record offers an overall quality indication, which can be undefined, good, tolerable or critical. This quality indication may be used as the sole trigger or as one of multiple trigger criteria defining the trigger for the recording of the respective packet stream. Fig. 7 exemplifies the quality of plural RTP streams carrying VoIP traffic in 5-second impairment analysis intervals as indicated by their corresponding quality data records. The dark bars are intended to represent quality data records, which determined some critical impairment of one of the RTP streams. The light gray bars may represent tolerable impairments. Each quality data record may offer an overall quality indication, which can be undefined, good, tolerable or critical. In this example, the critical condition can be used to trigger the packet recording, however with the amount of detail provided by each quality data record, triggers can be selected much finer as outlined in more detail below.

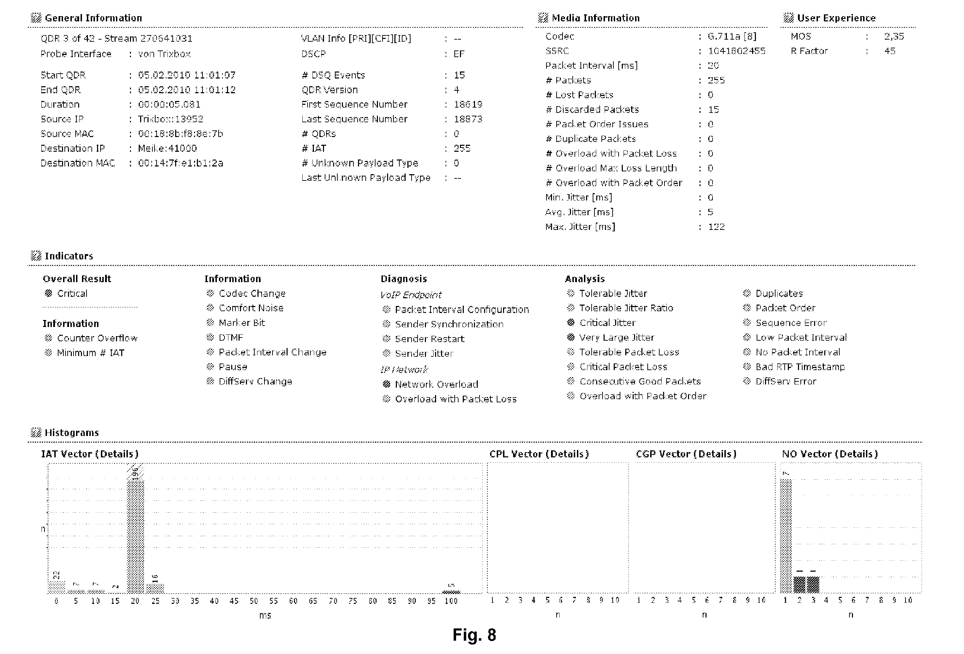

Fig. 8 shows a full representation of a single quality data record (QDR) according to an exemplary embodiment of the invention. The quality data record (impairment analysis record) provides an overview of the packets of the respective packet stream for which it has been generated by the impairment detection module of the monitoring probe. The quality data record may for example comprise general information on the monitored stream and the generation of the quality data record itself. This general information may for example indicate a start and end time stamps (Start QDR and End QDR) indicating the points in time for which the QDR has been generated. Furthermore, the time duration (Duration) of the time span on which it is reported could be explicitly indicated in the quality data record. Besides this information, the general information may also indicate the IP and/or MAC address of the communication end-points of the packet stream (Source IP, Source MAC, Destination IP, and Destination MAC), packet prioritization information such as the DSCP used in the packets of the packet stream, and the sequence number range (First Sequence Number, Last Sequence Number) of the RTP packets being reported.

Moreover, the quality data record may also contain various information on the media data transported in the packet stream, such as codec information (Codec), the Synchronization Source (SSRC) indicated in the RTP packet headers, as well as packet stream metrics, such as for example the packet interval that would be implied by the codec (Packet Interval), the number of packets on which the QDR is based (optional), minimum, average, and maximum jitter, etc. Furthermore, also "user experience" metrics such as MOS or R Factor could be included.

In addition the quality data record may further comprise a histogram of the inter-arrival time of the packets of the respective stream within the impairment analysis interval for which the quality data record has been generated and a CPL (Consecutive Packets Lost) Vector that indicates the number of consecutive packets lost and the CGP (Consecutive Good Packets) that indicates the number of consecutive packets that have been received in good order. The latter two metrics may be determined across multiple impairment analysis intervals. The NO Vector indicates at what frequency (how often) and how long (time period) packets are buffered in the network. It can be considered a more detailed representation of the "bucket" 0 to 2.5 ms in the histogram of the inter-arrival-time as shown in Fig. 5.

Furthermore the quality data record may optionally also comprise indicators that visually indicate the analysis results and impairments/error causes of the impairment of the packet stream, such as changes in the media codec, packet interval, DSCP, the presence of comfort noise in the analyzed packets, etc. The indicators may also include diagnostic information of the impairment detection, the presence of impairment in the session endpoints (e.g. packet interval configuration (conformance problems), synchronization loss, sender restart, and jitter) or the network (e.g. network overload with/without packet loss). Also a classification of the examined metrics, such as jitter packet loss, packet order, number of duplicated packets, DiffServ errors, bad RTP time stamps, etc. could be included to allow for a fast-to-grasp overview on the quality of the monitored packet stream from the results presented in the quality data record. Furthermore, an overall result of the packet stream quality may be included (Overall Result).

**Criteria for triggering Packet Capture**

Based on the results of the impairment analysis performed for the isochronous real-time streams, and/or the metrics and information comprised in the quality data record, one of more triggers may defined that cause the probe to capture the packets of given packets streams. Each trigger may have one or more trigger criteria that need to be fulfilled for the trigger to fire. If a session detection is implemented, the triggers may not only cause the capturing of a packet stream an impairment of which has been detected in the impairment detection module, but also the capturing of the other streams belonging to the session.

There may be one of more triggers defined that cause the packet capturing. A simple trigger may be for example the detection of impairment of a packet stream, e.g. by means of pattern recognition as discussed above that causes the storage of the packets of a given isochronous packet stream that have been received in the current (analyzed) impairment analysis interval. Another simple trigger would be to use the "Overall Result" within the quality data record as exemplarily shown in Fig. 8. Furthermore, the trigger may also be made dependent on detecting a given or configurable type of impairment, i.e. caused by a specific error.

Also more complex triggers may be defined. For example, in one embodiment of the invention, the trigger may require that impairment of a packet stream is detected more than a given threshold number of times within a given impairment analysis window spanning multiple times. The impairment analysis window is spanning multiple consecutive impairment analysis intervals. This way it will be possible to further reduce false-positive results, which can even more reduce the amount of recorded data.

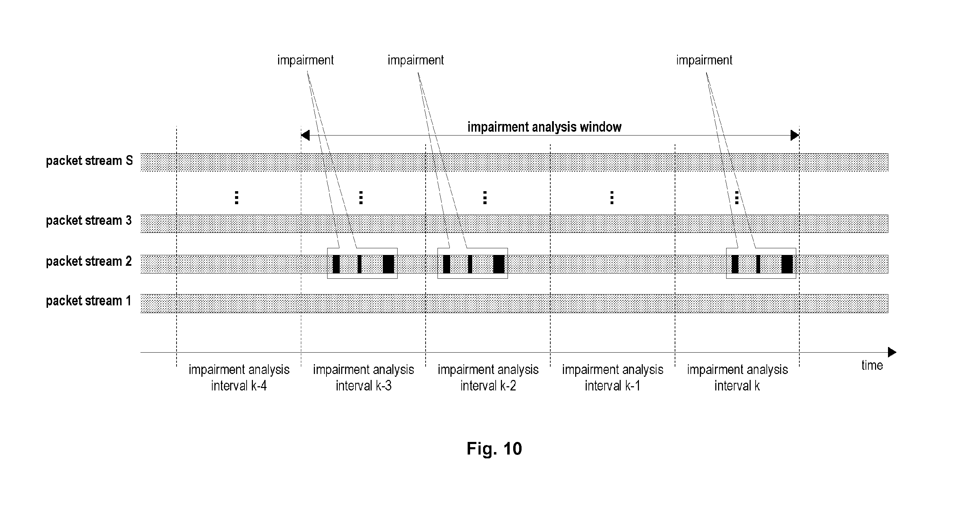

Fig. 10 illustrates an exemplary implementation of such packet capturing mechanism. In this example, it is assumed that the packets of a packet stream are recorded, if impairment within the data stream is detected in at least three out of four consecutive impairment analysis intervals (i.e. the impairment analysis window). The currently analyzed impairment analysis interval of the impairment analysis window is the impairment analysis interval with the highest index (here $k$).

Accordingly, as can be seen for impairment analysis interval $k$-3 and impairment analysis interval $k$-2, if an impairment is detected for a packet stream (here packet stream 2), the packets of the respective impairment analysis intervals are temporarily kept in memory of the monitoring probe, as long as their corresponding impairment analysis interval is within the impairment analysis window, i.e. they not saved to disk right away. Only if the impairment has been detected a desired number of times within the same packet stream, the captured packets would all be written to file, e.g. at the end of the call to be available for further analysis. Upon finishing the analysis of impairment analysis interval k, the trigger condition is met and the packets of impairment analysis interval $k$-3, impairment analysis interval $k$ - 2 and impairment analysis interval $k$ are stored by the monitoring probe.

Furthermore, in addition to or alternatively to making the trigger depending on certain events occurring multiple times within a given time period, more complex triggers may be defined dependent on the results of a pattern recognition and another metric measured or calculated for the respective packet stream or the current impairment analysis interval.

A trigger for packet recording could also be based on a source IP address to record all problems of a specific subscriber only. Another alternative may be to define a trigger that records packets of streams that fall below a certain MOS score. Also a combination of impairments, for example the detection of "Network Overload" together with "Packet Loss" beyond a certain threshold level could be defined as a trigger for packet capturing.

In one embodiment of the invention, a trigger may be defined by a logical combination of plural parameters. The parameters may include metrics and information that are for example available from the quality data record as shown in Fig. 8. The parameters may thus for example include certain analysis results (e.g. a certain type of error being detected and/or the classification of a metric as critical), certain media information (e.g. one or more metrics of the media information exceeding/being below a threshold), or even general information (e.g. a given destination or source IP address, a given destination or source MAC address, etc.).

Returning to the patterns outlined with respect to Fig. 5 and Fig. 6 above, the pattern outlined with respect to Fig. 5 is a very common pattern that can be seen in the up-link of residential customers using asynchronous DSL (Digital Subscriber Line) connectivity to their ISP (Internet Service Provide) for placing VoIP calls. While the buffering of packets is causing jitter, which by itself already causes quality degradations it is even more critical, if packets during a period of bandwidth limitation are being drop, and therefore lost for the call. Dropping of packets in a router is a healthy and necessary behavior of network components. However, dropping packets is only acceptable for protocols that are able to recover packet loss. Real time applications like VoIP do not fall into this category of protocols.

Network components (routers) may be able to identify the priority of a packet for example based on the DiffServ byte in the IP header. Real time applications like VoIP should always use the highest class of service that can be configured, which is Expedited Forwarding (EF). Dropping packets of this class should be avoided by the network components. With this knowledge the very special, real-time service specific recording trigger can be derived to identify these problems.

For example a trigger for storing the packets of an isochronous real-time packet stream may be defined as follows for the error cause outlined with respect to Fig. 5.

Record packets of the data stream, if:

a) Pattern recognition did detect bandwidth limitations, and
b) Packets have been lost during such a limitation, and
c) The DSCP class was set to Expedited Forwarding.

Also the rhythmic inter-arrival time behavior of RTP packets as shown in Fig. 6 being a unique indicator for a VoIP sender conformance violation is a pattern that can be frequently found in VoIP sessions. The recording trigger which would allow the recording of packets of VoIP packet stream that experience a VoIP sender conformance violation may be for example defined as follows.

Record packets of the data stream, if:

a) Packet count for the packet interval (e.g. 20 ms) expected due to the supposed isochronous nature of the real-time packet stream is below a specified threshold (e.g. in Fig. 4 no packets have an inter-arrival time of 20 ms), and
b) The distribution of received packets is evenly below and above the expected packet interval, and
c) The distribution of packets below and above the expected packet interval contains almost the same number of packets

This exemplary trigger definition can be used to isolate conformance violations of VoIP devices, which are very hard to track, as conformance problems cannot be detected by evaluation of metrics such as minimum, maximum or average jitter.

Sophisticated recording trigger like this can greatly reduce the amount of captured network traffic and at the same time greatly reduce service hours to locate this sort of a problem. Furthermore, the trigger(s) may be defined specifically for filtering relevant error causes and problems in the isochronous packet streams. It should be noted that the "colloquial" recording trigger examples above may be - in praxis - described in a more formal script type description language, which may also allow the definition of threshold values to more precisely define the trigger events and criteria.

Moreover, as has become apparent from the above, the recording triggers may not directly bound to an individual, single metric or result obtained from the impairment analysis, but arbitrarily complex recording triggers might be defined by logical combinations of thresholds for metrics obtained from the impairment analysis (and pattern recognition). Furthermore, also criteria not directly related to a stream parameter could be considered in the definition of the recording trigger. These other criteria may be for example the number of times a metric is below/above a threshold within a given/configurable time window, the number of times a certain error cause is detected in the packet stream within a given/configurable time window, specific session types (e.g. use of certain protocols or port numbers, only audio/speech/video session, etc.), session end-points (e.g. specific destination/source IP addresses), etc.

To allow the definition of arbitrary recording triggers based on the impairment analysis results and metrics obtained by the impairment analysis mode and the administration thereof, the probe may provide a user interface to operator of the probe. This interface may for example allow definition and administration of the trigger(s) by means of a script-type description language. This interface may further allow remote access to the monitoring probe, so that the operator can efficiently control multiple probes in the network.

**Packet Capturing**

Once a recording trigger fires, the monitoring probe starts recording the packets of the isochronous real-time packet stream (and optionally also the other streams of a session) for which the recording trigger fires. Which packets of the isochronous real-time packet stream(s) are to be recorded may depend on the type of the session, for example whether the session is a communication of voice/audio only, video only, a mix between speech/audio and video, the number of packet streams belonging to the session, etc. Furthermore, there may also be different strategies of how many impairment analysis intervals should be recorded.

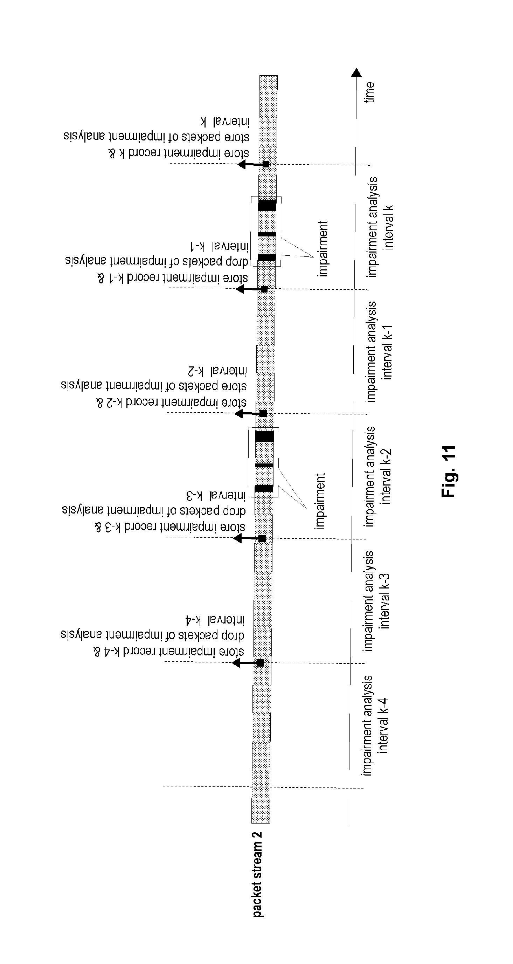

For example, in one exemplary embodiment of the invention and as shown in Fig. 11, each time an impairment is detected in a given packet stream (packet stream 2), it may be assumed that a recording trigger is fired and the probe stores the packets of packet stream 2 that have been received within the current impairment analysis interval. For example, as shown Fig. 11, no impairment of packet stream 2 is detected by the impairment detection module for impairment analysis intervals $k$-4, $k$-3 and $k$-1, so that at the end of each respective impairment interval, only the impairment record obtained for the respective impairment analysis interval is stored on a non-volatile memory, such as a hard disk, while the packets of packet stream 2 received in the respective impairment analysis intervals $k$-4, $k$-3 and $k$-1 are deleted from the voluntarily memory in response to no recording trigger firing at the end of the respective intervals. In impairment analysis interval $k$-2 and $k$, the impairment detection module has detected an impairment, which is causing the recording trigger to fire for the impairment analysis intervals *k*-2 and *k*, respectively. The monitoring probe thus stores the packets of packet stream 2 received within impairment analysis intervals *k*-2 and k at the end to the respective interval to a non-volatile memory.

In another exemplary embodiment of the invention, the storage mechanism described with respect to Fig. 11 is improved in that the monitoring probe is not only storing the packets of an impaired packet stream received within the impairment analysis interval for which the recording trigger fires. For example, the monitoring probe may also be configured to store all packets of the impaired packet stream that are received within the impairment analysis interval for which the recording trigger fired, and a number of subsequent impairment analysis intervals. The impairment analysis intervals to be recorded may be for example defined by the operator of the probe or may be preconfigured. In the extreme case, the all packets of the impaired packet stream are captured by the monitoring probe, starting from the impairment analysis interval for which the recording trigger fired and ending with the end of the session to which the impaired packet stream belongs.

In another exemplary embodiment, it may be desirable to be able to reconstruct the speech/audio and/or video/picture that has been received by the session end-point. Hence, all packets the information of which is required to reproduce the speech/audio and/or video/picture should be recorded. This may be particularly relevant when monitoring video stream. For example, if using an MPEG codec to encode the video, the video stream is made upon few packets containing the full video picture (so-called I-Frames), and many packets containing video pictures differentially encoded relative to the preceding I-Frame (so-called P-Frames). In order to reproduce the video pictures that have been actually displayable at the receiver of the video stream, it should therefore be assured that the packet(s) of the video stream containing the last I-Frame are captured.

Therefore, in this embodiment a sliding window technique used that is recording the packets of a packets stream received in the impairment analysis intervals of an impairment analysis window for which the recording trigger fired and a given or configurable number of preceding impairment analysis interval(s). This means that - unlike shown in Fig. 11 - the packets of the packet stream may be kept in memory (RAM) of the monitoring probe, as long as their respective impairment analysis interval falls within the impairment analysis window. In one more advanced implementation, in order to avoid memory overflow, a memory management module of the monitoring probe, which may also be implemented in software, could dynamically manage the number of packets streams buffered in the memory (RAM). The memory management module may for example reduce this number to avoid the buffering of additional packet streams even though a trigger would fire for an additional packet stream. If a recording trigger fires for the packet stream, the packets of all impairment analysis intervals within the impairment analysis window (including the impairment analysis interval for which the recording trigger fired) are stored on a non-volatile memory of the monitoring probe.

Each time a new impairment analysis interval is encountered, the impairment analysis window is advanced to cover the new current impairment analysis window, and the packets of the packet stream received by the probe within the impairment analysis interval falling out of the impairment analysis window may be deleted from the monitoring probe's volatile memory.

Since this operation implies that more packets need to be kept in the volatile memory of the monitoring probe, the size of the volatile memory may imply the upper limit of the number of impairment analysis intervals of the impairment analysis window. Furthermore, in this embodiment of the invention, the monitoring probe is recording packets of the currently analyzed impairment analysis interval and one or more past impairment analysis intervals. The monitoring probe may optionally further capture packets of the packet stream that are to be received in future impairment analysis interval(s) as described above.

Returning to the example of monitoring and capturing packets of a media session comprising video, the use of a sliding window (impairment analysis window) make sure that all packets up to the last I-Frame are part of the temporarily stored packets. Otherwise an analysis of the actually perceived video quality of the video stream at a later point in time based on the video picture reproduced at the receiver will not be possible, since a video stream recovery would not be possible by video decoders because of the last I-Frame not being available. As indicated above, the amount of additional volatile memory required to hold all of the packets between I-Frames is therefore much higher, but the number of concurrently transferred streams will me much lower because of the rather large bandwidth requirements of video data. For example, standard video as being used by IPTV requires approx. 3 to 6 MBit/s for standard definition (SD) video and approx. 5 to 15 MBit/s for high definition (HD) video. This means the number of concurrent video streams possible on 1 GB Ethernet is rather small. Video conferencing systems on the other hand require as little as 384 kBit/s of bandwidth for each video call (see the Whitepaper "Network Planning Worksheets for Videoconferencing" of Polygon Inc., available at http://www.polycom.com). This means about 2500 video conferencing calls would have to be concurrently monitored. The exact amount of memory required to temporarily store all packets of the video stream is hard to estimate, because the number of P-Frames in between I-Frames vary from manufacturer to manufacturer. However, assuming today's server hardware and neglecting further advancements in technology and memory size, it is possible to have 4 GB to 8 GB of RAM, which would allow to maintain packets in RAM that correspond up to 30 seconds of video, which should ensure that the last I-Frame of the video is captured.

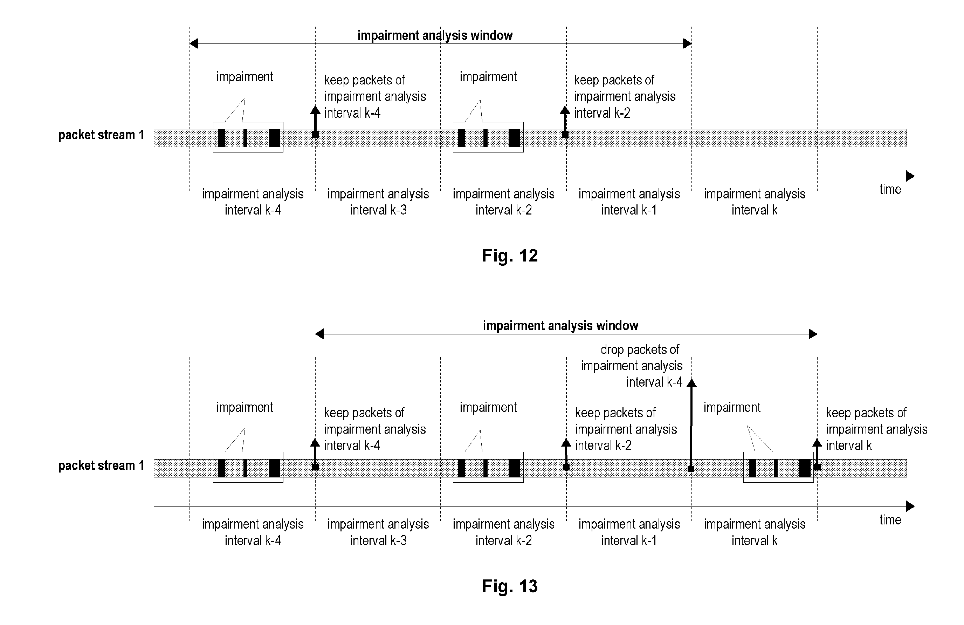

Fig. 12 and Fig. 13 highlight the use of a siding window technique for recording the packets of a packets stream according to one exemplary embodiment of the invention. In Fig. 12, it may be assumed that the current analysis interval is exceptionally indicated by index *k*-1. Hence, for current analysis interval *k*-1, the impairment analysis window (having exemplarily a size of four impairment analysis intervals) spans impairment analysis intervals *k*-4, *k*-3, *k*-2 and *k*-1. It may be further assumed for impairment analysis intervals *k*-4 and *k*-2, the impairment detection module has detected an impairment that according to the trigger criteria would cause a recording of the packet stream if a given number of impairments is occurring within the impairment analysis intervals covered by the current impairment analysis window. Accordingly, the packets of for impairment analysis intervals *k*-4 and *k*-2 have not been discarded immediately at the end of the respective intervals, but are kept as long as impairment analysis intervals *k*-4 and *k*-2 are within the impairment analysis window, as shown in Fig. 12.

Considering now Fig. 13, the next impairment interval *k* becomes the current impairment analysis interval on which impairment analysis is performed by the impairment detection module. Accordingly, the impairment analysis window is advanced so that it now covers impairment analysis intervals *k*-3, *k*-2, *k*-1 and *k*. As impairment analysis interval *k*-4 has fallen out of the impairment analysis window, the packets of the packet stream received in this interval that have been kept in the volatile memory of the monitoring probe are discarded. As it is assumed for exemplary purposes that the impairment detection module detects an impairment of the packet stream within impairment analysis interval *k*, but the trigger criteria are still not fulfilled, the packets of the packet stream received in impairment analysis interval *k* are kept in memory along with the packets of the packet stream received in impairment analysis interval *k*-2, and the next impairment analysis interval becomes analyzed, causing again the impairment analysis window to advance.

Alternatively, in another exemplary implementation, the monitoring probe may keep all packets received within the impairment analysis intervals of the current impairment analysis window by default (i.e. irrespective of whether an impairment has been detected in the respective impairment analysis windows), and stores all packets to a non-volatile memory if a trigger is firing for the current impairment analysis window being analyzed by the impairment detection module. This alternative implementation may be advantageous in case video streams are to be captured as outlined above. Hence, for the impairment analysis window shown in Fig. 12 the packets of impairment analysis intervals *k*-4, *k*-3, *k*-2 and *k*-1 would be buffered at the monitoring probe. Upon advancing the impairment analysis window, as shown in Fig. 13, and assuming that no trigger fired at the end of impairment analysis interval *k*-1, the monitoring probe would delete the packets received in impairment analysis interval *k*-4, and would buffer the packets of the packet stream received within the impairment analysis interval *k*.

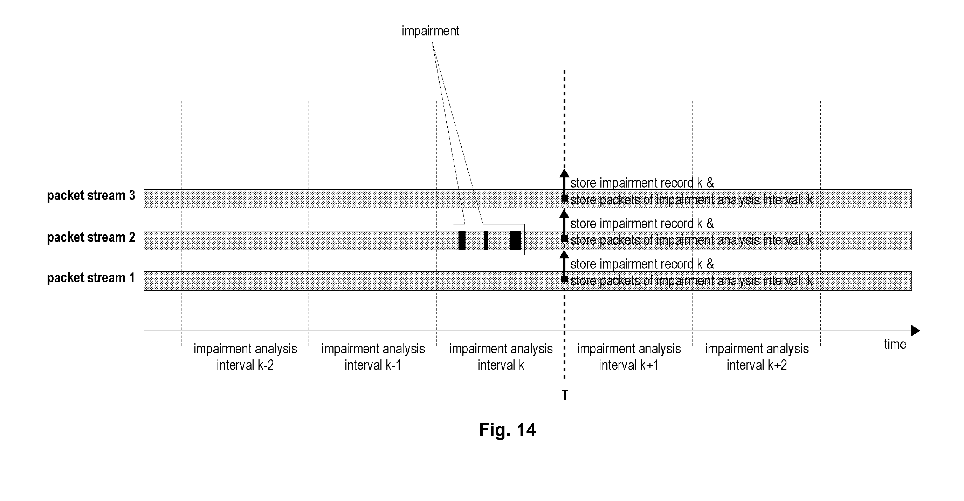

Furthermore, in another embodiment of the invention, session detection by means of the stream detection module is implemented so that the impairment detection module is enabled to not only cause the capturing packets of an individual packets stream of a session, but all streams of the given session. Fig. 14 exemplarily outlines a packet capturing mechanism according to an embodiment of the invention, where all packet streams of a session are recorded together with the impairment record for the current impairment analysis interval *k*, if a recording trigger fires for one of the packet streams of the session. In this example, packet stream 1, 2 and 3 are packet streams of a single session. In impairment analysis interval *k*, the impairment detection module detects and impairment of packet stream 2, which caused a recording trigger for packet stream 2 to fire at the end of impairment analysis interval *k*. In response to this recording trigger the monitoring probe will record the packets of all streams of the session to which packet stream 2 belongs and that have been received in the impairment analysis interval *k*.

Please note that strictly speaking the point in time the quality record for the current impairment analysis interval *k* and/or the point in time when it is decided whether to trigger the capturing of packets of a packet stream is not exactly the end of the current impairment analysis interval *k* (denoted *T* in Fig. 14), as the last packets that arrive with the current impairment analysis interval *k* may still need to be processed. The results of the impairment analysis and/or the quality record for the current impairment analysis interval *k* can be considered to be provided within a couple of milliseconds after the next impairment analysis interval *k*+1 begins, so that one can speak of a true real-time analysis.

In a more detailed implementation, in response to the recording trigger for packet stream 2, the impairment detection module requests the stream detection module to provide an identification of all streams belonging to the session to which packet stream 2 belongs. When receiving this information from the stream detection module, the impairment detection module would then be aware of all streams belonging to the session and could store the packets of packets streams 1, 2 and 3 received in the current impairment analysis interval on a non-volatile memory.

Furthermore, it should be noted that the recording of all packets streams of a session in response to a recording trigger fired for one (or more) of the packet streams belonging to the session may be readily combined with the different exemplary packet capturing mechanisms described previously herein. The packet capturing mechanism may be configurable by the operator or predefined for each isochronous packet stream individually or for a packet stream type. For example, for video streams, the monitoring probe may use a capturing mechanism based on a sliding window as described above, while only packets of the current impairment analysis interval are captured for audio /speech streams. By defining the capturing mechanism per packet stream or packet stream type, it may be ensured that the actually media content of each captured packet stream can be reconstructed at a later point in time, for example for post-processing and error analysis.

In the previous exemplary embodiment of the invention, impairment-triggered packet capturing has been discussed. In addition or alternatively thereto, the trigger criteria may also be based on parameters like session type or session end-points. For example, the triggers may be defined to monitor (e.g. independent or dependent on the actual impairment of packet streams), certain media types and/or session end-points. This may for example allow limiting the monitoring and capturing VoIP calls using a specific protocol stack or the monitoring and capturing VoIP calls of certain end-points identifies by means of their IP address.

Since quality degradations in IP networks have a transient and bursty behavior, it is likely that many users are experiencing quality problems, while the selected and recorded packet streams according to the trigger criteria defined may not show any impairment. The full picture about the quality of all calls may be missing, and only by chance impaired streams will be part of the recording, and most likely the problem the support staff is looking for is not even included. However, for monitoring and capturing specific impairment scenarios, it may be advantageous to be able to define the trigger criteria and events as "narrow" as possible to filter the traffic for only the given scenario to be evaluated, and the snapshot of the actually network traffic actually monitored may suffice for specific purposes.

**Post Processing of the Quality Reports**

Based on the proposed impairment driven packet capture mechanisms discussed herein, the amount of recorded VoIP data can be reduced by approximately 80%, when assuming that in practical VoIP networks, a maximum of 20% of all calls is affected by bad speech quality of some sort. The quality data records as well as the packet recordings for impaired packet streams will be written to a file.

In a further embodiment of the invention, the files comprising the recorded packets may be offloaded from the monitoring probe and imported into a post-processing system. The post processing system is then able to run reports and generate statistical information, useful to gain a full understanding about the service quality of the network. By this post-processing of the recorded data, further useful information that can help network management to fine-tune their service, or to identify problematic end-points that need to be replaced can be obtained from the reports. It may even be possible to determine, if network policies about the use of specific payloads and class of service configurations are considered.

The analysis of the captured packet data at the post processing platform may further allow to generate alarms and reports, as well as to offer interactive features to help a user to navigate through the mass-data collected, and help him identify the problematic streams and session that need his attention. If after post-processing the cause of an error of packet streams or sessions is still unclear and may not be determined by means of software, the actually audio and/or video data may be reconstructed from the recorded packets of the impaired streams and audio and/or video could be manually analyzed and judged.

Especially for the diagnosis of speech quality, the post processing of the recorded packet streams can provide important insights into the error cause. For example since the passive probe does determine the impact of sender or network related problems, it would still be possible that the problem is rather originated by bad audio encoding, which results in bad quality of the payload transferred. Problems already existing in the payload cannot be determined by packet flow analysis alone, but requires payload analysis. By using the described packet capturing mechanisms, the actual packet payload is captured and may be further evaluated on a post-processing platform. For this purpose, payload analysis, which takes the payload of the recorded packets into account, such as for example Perceptual Evaluation of Speech Quality (PESQ) could be used.

In a further embodiment, the post processing of the captured packet streams may also be used for the detection of new, so far unseen patterns in the captured packet streams. These new patterns may be then for example used for packet capturing in the monitoring probe. For example, this could be realized by defining triggers tailored for capturing events/impairments specific to the new patterns. In this case not the payload of the recorded packets may be of interest, but rather the packets can be analyzed by a protocol specialist to eventually define new patterns or diagnostic algorithms that then could be added to the monitoring probe's packet flow analyzer logic (impairment detection module).

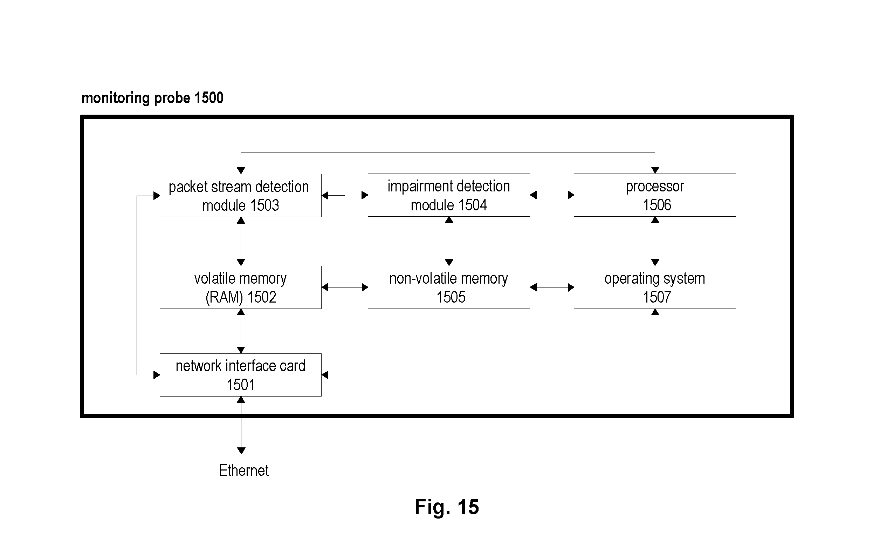

Fig. 15 shows the structure of an exemplary monitoring probe 1500 according to one embodiment of the invention. The monitoring probe 1500 comprises one or more network interface cards 1501 to connect the monitoring probe 1500 to the network, e.g. an Ethernet. The network interface card 1501 may be a special packet-capture card, which is capable of storing/buffering all incoming data in a volatile memory 1502 of the monitoring probe 1500. The volatile memory 1502 is for example a RAM. Furthermore, the network interface card 1501 may be communicatively coupled with the other entities within the monitoring probe 1500, such as the operating system 1507 run by a processor 1506 of the monitoring probe 1500, the packet stream detection module 1503 and the impairment detection module 1504.

The packet stream detection module 1503 may be implemented software that is run/executed by processor 1506. The packet stream detection module 1503 may detect the individual real-time packet streams transporting media data within the packets arriving at the network interface card 1501 and are provided in the volatile memory 1502.

Furthermore, depending on the implementation, the packet stream detection module 1503 may also perform a session detection to detect all packet streams belonging to the same session. The packet stream detection module 1503 may be further communicatively coupled to the impairment detection module 1504. In one exemplary implementation, the packet stream detection module 1503 performs the functions of blocks 403, 404, 405 and 406 as shown in Fig. 4.

The impairment detection module 1504 may be implemented software that is run/executed by processor 1506. The impairment detection module 1504 performs the impairment analysis on the packets streams that have been detected by packet stream detection module 1503. Furthermore, the impairment detection module 1504 will decide whether the packets of a respective real-time packet stream need to be recorded and will cause the storage of the packets of the given stream or streams buffered in the volatile memory 1502 in the non-volatile memory 1505. Non-volatile memory 1505 may be for example implemented by means of a hard disk or solid-state disk. Furthermore, impairment detection module 1504 will generate the quality records for the real-time packet streams and will store them in the non-volatile memory 1505 of the monitoring probe 1500. The monitoring probe 1500 may further provide an interface to download/push the stored quality records and packets of the packet streams to a post processing platform for further analysis.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for storing packets of isochronous real-time packet streams in a packet-switched communications network, the method comprising the following steps performed by a probe:

   receiving packets of plural packets streams including the isochronous real-time packet streams,
   performing on an impairment analysis interval-basis an impairment analysis on the received isochronous real-time packet streams, wherein the impairment analysis analyses packets of the respective isochronous real-time packet streams received at the probe within the current impairment analysis interval, to thereby obtain for each isochronous real-time packet stream and at the end of the current impairment interval an impairment record of the packets of the respective isochronous real-time packet stream,
   deciding for each isochronous real-time packet stream and on an impairment analysis interval-basis, whether to store or drop the packets of the respective isochronous real-time packet stream received within the current impairment analysis interval, wherein the decision is based on the impairment record obtained for the respective isochronous real-time packet stream within the current impairment analysis interval, and
   storing or dropping the packets of the respective isochronous real-time packet stream received within the current impairment analysis interval based on the decision.

2. The method according to claim 1, further comprising the step of storing the impairment records generated for the isochronous real-time packet streams generated for the current impairment analysis interval.

3. The method according to claim 1 or 2, wherein the impairment analysis detects impairments of a respective isochronous real-time packet stream received within the current impairment analysis interval based on deviations from its presumed isochronous characteristics.

4. The method according to one of claims 1 to 3, wherein the method further comprises the following steps performed by the probe:

   identifying the isochronous real-time packet streams of which packets are received at the probe within the current impairment analysis interval, and
   temporarily buffering the packets of the identified isochronous real-time packet streams received within the current impairment analysis interval,

5. The method according to one of claims 1 to 4, wherein the impairment analysis further comprises the following steps performed by the probe:

   determining for each isochronous real-time packet stream, at least the inter-arrival time of packets received in sequentially correct order within the current impairment analysis interval,

performing, for each isochronous real-time packet stream, a pattern matching to thereby determine whether one of plural histogram patterns indicative of different types of impairments is present in the histogram of the inter-arrival time of the respective isochronous real-time packet stream's packets received in sequentially correct order within the current impairment analysis interval, and

determining for each isochronous real-time packet stream, an impairment record of the current impairment analysis interval indicative of the type of an impairment, if present, based on the result of the pattern matching.

**6.** The method according to one of claims 1 to 5, wherein the types of impairments of a isochronous real-time packet stream that can be detected by the impairment analysis at least include one of:

- bandwidth problems of the communication network
- problems in the implementation of the protocol stack providing the packets of the isochronous real-time packet stream
- configuration problems related to packet prioritization, and
- problems related to service policy violations by use of unauthorized codec or packetization intervals.

**7.** The method according to one of claims 1 to 6, further comprising the step of the probe storing packets received in at least one subsequent impairment analysis interval following the current impairment analysis interval for isochronous real-time packet streams for which it has been decided to store the packets of the current impairment analysis interval.

**8.** The method according to one of claims 1 to 7, wherein in the step of deciding for each isochronous real-time packet stream and on an impairment analysis interval-basis, the probe decides to store the packets of a respective isochronous real-time packet stream, if an impairment in the packets is detected in a predetermined or configurable number of impairment analysis intervals within a impairment analysis window.

**9.** The method according to claim 8, wherein the probe stores the packets of the respective isochronous real-time packet stream that have been received in the impairment analysis intervals of the impairment analysis window, in which the impairment has been detected.

**10.** The method according to one of claims 1 to 9, further comprising the step of determining isochronous real-time packets streams belonging to one session, based on control signalling related to the session comprised in packets received at the probe.

**11.** The method according to one of claims 1 to 10, wherein the decision of store packets of one of the plural isochronous real-time packets streams belong to the one session triggers the storage of packets of all isochronous real-time packet streams belonging to the session for the current impairment analysis interval by the probe.

**12.** The method according to one of claims 1 to 11, wherein in the step of deciding for each isochronous real-time packet stream and on an impairment analysis interval-basis, whether to store or drop the packets of the respective isochronous real-time packet stream, the probe decides on the storage of the packets based on a combination of two or more of the following parameters of the packets of the respective isochronous real-time packet stream:

- a payload type indicated in of the packets of the respective isochronous real-time packet stream,
- histogram of the inter-arrival time of the packets of the respective isochronous real-time packet stream received at the probe in sequentially correct order in one impairment interval or accumulated across plural impairment intervals,
- jitter of the inter-arrival time of the packets of the respective isochronous real-time packet stream across in one impairment interval or accumulated across plural impairment intervals,
- packet interval according to a time-stamp included in a header of the packets of the respective isochronous real-time packet stream in one impairment interval or accumulated across plural impairment intervals,
- number of consecutive packets of the respective isochronous real-time packet stream received at the probe in one impairment interval or accumulated across plural impairment intervals,
- number of lost packets of the respective isochronous real-time packet stream in one impairment interval or accumulated across plural impairment intervals,
- number of duplicated packets of the isochronous real-time packet stream in one impairment interval or accumulated across plural impairment intervals,

- interleaving level of the packets of the respective isochronous real-time packet stream received at the probe determined based on sequence information included in the header of the packets, and
- prioritization of the packets of the respective isochronous real-time packet stream in the communications network according to header information comprised in the header of the packets,

13. A monitoring probe for storing packets of isochronous real-time packet streams in a packet-switched communications network, the probe comprising:

a network interface card for receiving packets of plural packets streams including the isochronous real-time packet streams,
a volatile memory for buffering the plural packets streams or the isochronous real-time packet streams,
a impairment detection module for performing on an impairment analysis interval-basis an impairment analysis on the received isochronous real-time packet streams, wherein the processor is adapted to perform an impairment analysis that analyses packets of the respective isochronous real-time packet streams received at the probe within the current impairment analysis interval, to thereby obtain for each isochronous real-time packet stream and at the end of the current impairment interval an impairment record of the packets of the respective isochronous real-time packet stream,

wherein the impairment detection module is further adapted to decide for each isochronous real-time packet stream and on an impairment analysis interval-basis, whether to store or drop the packets of the respective isochronous real-time packet stream received within the current impairment analysis interval, wherein the decision is based on the impairment record obtained for the respective isochronous real-time packet stream within the current impairment analysis interval, and
a non-volatile storage for storing the packets of the respective isochronous real-time packet stream received within the current impairment analysis interval in the volatile memory in response to the decision of the processor,
wherein the impairment detection module is adapted to delete in response to the decision of the processor the buffered packets of the respective isochronous real-time packet stream received within the current impairment analysis interval.

14. The monitoring probe according to claim 26, wherein the network interface card is adapted to store the plural packets streams or the isochronous real-time packet streams in a shared memory area of the volatile memory directly accessible by an application performing the impairment analysis.

15. A computer readable medium storing instructions that, when executed by a processor of a monitoring probe, cause the monitoring probe to store packets of isochronous real-time packet streams in a packet-switched communications network, by:

receiving packets of plural packets streams including the isochronous real-time packet streams,
performing on an impairment analysis interval-basis an impairment analysis on the received isochronous real-time packet streams, wherein the impairment analysis analyses packets of the respective isochronous real-time packet streams received at the probe within the current impairment analysis interval, to thereby obtain for each isochronous real-time packet stream and at the end of the current impairment interval an impairment record of the packets of the respective isochronous real-time packet stream,
deciding for each isochronous real-time packet stream and on an impairment analysis interval-basis, whether to store or drop the packets of the respective isochronous real-time packet stream received within the current impairment analysis interval, wherein the decision is based on the impairment record obtained for the respective isochronous real-time packet stream within the current impairment analysis interval, and
storing or dropping the packets of the respective isochronous real-time packet stream received within the current impairment analysis interval based on the decision.

Fig. 1

Fig. 2

| 7 Application Layer | SIP |
|---|---|
| 6 Presentation Layer | |
| 5 Session Layer | RTP RTCP |
| 4 Transport Layer | TCP UDP |
| 3 Network Layer | IP |
| 2 Data Link Layer | Ethernet |
| 1 Physical Layer | Electrical / Optical / Wireless |

**Fig. 3**

TAP

TX (half-duplex) 401    RX ( half-duplex) 402

| Real-time packet detection 403 | Real-time packet detection 404 |

monitoring probe

| Real-time packet stream detection 405 | Real-time packet stream detection 406 |

| Real-time packet stream impairment detection 407 | Real-time packet stream impairment detection 408 |

| Stream quality reports every 5 seconds 409 | Stream quality reports every 5 seconds 410 |

| Packet capture and recording of bad streams 411 | Packet capture and recording of bad streams 412 |

Fig. 4

**Fig. 5**

EP 2 369 807 A1

**Fig. 6**

| Ethernet Header (14 Bytes) | IP Header (20 Bytes) | UDP Header (8 Bytes) | RTP Header (12 Bytes) | RTP Payload (160 Bytes) |
|---|---|---|---|---|

**Fig. 16**

Fig. 7

### General Information

| | | | | |
|---|---|---|---|---|
| QDR 3 of 42 - Stream 270641031 | | VLAN Info [PRI][CFI][ID] | : -- | |
| Probe Interface | : von Trixbox | DSCP | : EF | |
| Start QDR | : 05.02.2010 11:01:07 | # DSQ Events | : 15 | |
| End QDR | : 05.02.2010 11:01:12 | QDR Version | : 4 | |
| Duration | : 00:00:05.081 | First Sequence Number | : 18619 | |
| Source IP | : Trixbox::13952 | Last Sequence Number | : 18873 | |
| Source MAC | : 00:18:8b:f8:8e:7b | # QDRs | : 0 | |
| Destination IP | : Meike:41000 | # IAT | : 255 | |
| Destination MAC | : 00:14:7f:e1:b1:2a | # Unknown Payload Type | : 0 | |
| | | Last Unknown Payload Type | : -- | |

### Media Information

| | |
|---|---|
| Codec | : G.711a [8] |
| SSRC | : 1041802455 |
| Packet Interval [ms] | : 20 |
| # Packets | : 255 |
| # Lost Packets | : 0 |
| # Discarded Packets | : 15 |
| # Packet Order Issues | : 0 |
| # Duplicate Packets | : 0 |
| # Overload with Packet Loss | : 0 |
| # Overload Max Loss Length | : 0 |
| # Overload with Packet Order | : 0 |
| Min. Jitter [ms] | : 0 |
| Avg. Jitter [ms] | : 5 |
| Max. Jitter [ms] | : 122 |

### User Experience

| | |
|---|---|
| MOS | : 2,35 |
| R Factor | : 45 |

### Indicators

**Overall Result**
● Critical

**Information**
● Counter Overflow
● Minimum # IAT

**Information**
● Codec Change
● Comfort Noise
● Marker Bit
● DTMF
● Packet Interval Change
● Pause
● DiffServ Change

**Diagnosis**
*VoIP Endpoint*
● Packet Interval Configuration
● Sender Synchronization
● Sender Restart
● Sender Jitter
*IP Network*
● Network Overload
● Overload with Packet Loss

**Analysis**
● Tolerable Jitter
● Tolerable Jitter Ratio
● Critical Jitter
● Very Large Jitter
● Tolerable Packet Loss
● Critical Packet Loss
● Consecutive Good Packets
● Overload with Packet Order

● Duplicates
● Packet Order
● Sequence Error
● Low Packet Interval
● No Packet Interval
● Bad RTP Timestamp
● DiffServ Error

### Histograms

**IAT Vector (Details)**

**CPL Vector (Details)**

**CGP Vector (Details)**

**NO Vector (Details)**

Fig. 8

past (impairment analysis intervals) | future (impairment analysis intervals)

packet stream S

⋮ ⋮ ⋮ ⋮ ⋮

packet stream 3

packet stream 2

packet stream 1

impairment analysis
interval k-2

impairment analysis
interval k-1

impairment analysis
interval k

impairment analysis
interval k+1

impairment analysis
interval k+2

time

T

**Fig. 9**

Fig. 10

Fig. 11

impairment analysis window

impairment

keep packets of
impairment analysis
interval k-4

impairment

keep packets of
impairment analysis
interval k-2

packet stream 1

impairment analysis
interval k-4

impairment analysis
interval k-3

impairment analysis
interval k-2

impairment analysis
interval k-1

impairment analysis
interval k

time

**Fig. 12**

impairment analysis window

drop packets of
impairment analysis
interval k-4

impairment

keep packets of
impairment analysis
interval k-4

impairment

keep packets of
impairment analysis
interval k-2

impairment

keep packets of
impairment analysis
interval k

packet stream 1

impairment analysis
interval k-4

impairment analysis
interval k-3

impairment analysis
interval k-2

impairment analysis
interval k-1

impairment analysis
interval k

time

**Fig. 13**

packet stream 3
packet stream 2
packet stream 1

impairment

store impairment record k &
store packets of impairment analysis interval k

store impairment record k &
store packets of impairment analysis interval k

store impairment record k &
store packets of impairment analysis interval k

impairment analysis interval k-2

impairment analysis interval k-1

impairment analysis interval k

impairment analysis interval k+1

impairment analysis interval k+2

T

time

**Fig. 14**

41

monitoring probe 1500

| packet stream detection module 1503 | impairment detection module 1504 | processor 1506 |

| volatile memory (RAM) 1502 | non-volatile memory 1505 | operating system 1507 |

| network interface card 1501 |

Ethernet

**Fig. 15**

Europäisches
Patentamt
European
Patent Office
Office européen
des brevets

## EUROPEAN SEARCH REPORT

**Application Number**

EP 10 15 7379

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/164550 A1 (RAHRER TIMOTHY J [CA] ET AL) 25 June 2009 (2009-06-25) | 1-4,6-15 | INV.<br>H04L29/06 |
| Y | * paragraph [0026] - paragraph [0036] * | 5 | |
| Y | US 2009/028061 A1 (ZAENCKER OLAF CARL [DE]) 29 January 2009 (2009-01-29)<br>* paragraph [0016] - paragraph [0046] * | 5 | |
| A | US 2008/186872 A1 (ZAENCKER OLAF CARL [DE]) 7 August 2008 (2008-08-07)<br>* paragraph [0004] - paragraph [0027] * | 1-15 | |
| A | US 2004/160896 A1 (LUNA STEVE [US] ET AL) 19 August 2004 (2004-08-19)<br>* paragraph [0084] - paragraph [0098] * | 1-15 | |
| A | US 7 532 581 B1 (METZGER MICHAEL M [US] ET AL) 12 May 2009 (2009-05-12)<br>* column 3 - column 5 * | 1-15 | |

**TECHNICAL FIELDS SEARCHED (IPC)**

H04L
H04M

The present search report has been drawn up for all claims

| Place of search | Date of completion of the search | Examiner |
|---|---|---|
| Munich | 16 September 2010 | Jurca, Alexandru |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 15 7379

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2010

| Patent document cited in search report | | Publication date | Patent family member(s) | Publication date |
|---|---|---|---|---|
| US 2009164550 | A1 | 25-06-2009 | NONE | |
| US 2009028061 | A1 | 29-01-2009 | NONE | |
| US 2008186872 | A1 | 07-08-2008 | DE 102005039192 A1<br>EP 1915849 A1<br>WO 2007020182 A1 | 01-03-2007<br>30-04-2008<br>22-02-2007 |
| US 2004160896 | A1 | 19-08-2004 | DE 102004001656 A1 | 02-09-2004 |
| US 7532581 | B1 | 12-05-2009 | US 2009190727 A1 | 30-07-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007020182 A1